(19) Europäisches Patentamt / European Patent Office / Office européen des brevets

(11) **EP 4 441 966 B1**

(12) **EUROPEAN PATENT SPECIFICATION**

(45) Date of publication and mention
of the grant of the patent:
**21.01.2026  Bulletin 2026/04**

(21) Application number: **22834807.4**

(22) Date of filing: **16.11.2022**

(51) International Patent Classification (IPC):
*H04L 9/40* (2022.01)      *H04W 12/00* (2021.01)
*H04W 12/041* (2021.01)    *H04W 12/0471* (2021.01)
*H04W 12/12* (2021.01)     *H04L 9/08* (2006.01)
*H04L 25/02* (2006.01)     *H04B 7/0404* (2017.01)
*H04B 7/0456* (2017.01)    *H04L 5/00* (2006.01)
*H04L 9/00* (2022.01)      *H04L 9/12* (2006.01)

(52) Cooperative Patent Classification (CPC):
H04L 63/16; H04B 7/0404; H04B 7/0456;
H04L 5/0051; H04L 5/0094; H04L 9/001;
H04L 9/0875; H04L 9/12; H04L 25/0224;
H04L 63/0435; H04L 63/061; H04L 63/1466;
H04L 63/1475; H04L 63/205; H04W 12/009;
(Cont.)

(86) International application number:
**PCT/US2022/079974**

(87) International publication number:
**WO 2023/102320 (08.06.2023 Gazette 2023/23)**

(54) **CONSIDERATIONS ON SECRET KEY EXTRACTION**

ASPEKTE DER EXTRAKTION GEHEIMER SCHLÜSSEL

CONSIDÉRATIONS SUR L'EXTRACTION DE CLÉ SECRÈTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.12.2021  GR 20210100837**

(43) Date of publication of application:
**09.10.2024  Bulletin 2024/41**

(73) Proprietor: **QUALCOMM INCORPORATED**
San Diego, California 92121-1714 (US)

(72) Inventors:
• **ELSHAFIE, Ahmed**
San Diego, CA 92121-1714 (US)
• **MANOLAKOS, Alexandros**
San Diego, CA 92121-1714 (US)
• **LY, Hung Dinh**
San Diego, CA 92121-1714 (US)

(74) Representative: **Jaeger, Michael David
Maucher Jenkins
Seventh Floor Offices
Artillery House
11-19 Artillery Row
London SW1P 1RT (GB)**

(56) References cited:
**WO-A1-2015/023233**

• **TAHA HASAN ET AL: "Secret Key Exchange
Using Private Random Precoding in MIMO FDD
and TDD Systems", IEEE TRANSACTIONS ON
VEHICULAR TECHNOLOGY, IEEE, USA, vol. 66,
no. 6, 1 June 2017 (2017-06-01), pages 4823 -
4833, XP011653962, ISSN: 0018-9545, [retrieved
on 20170616], DOI: 10.1109/TVT.2016.2611565**

**(Cont. next page)**

(52) Cooperative Patent Classification (CPC): (Cont.)
     **H04W 12/041; H04W 12/0471; H04W 12/12;**
     H04L 5/001; H04L 2209/80

# EP 4 441 966 B1

## Description

### BACKGROUND

**Technical Field**

The present disclosure generally relates to communication systems, and more particularly, to a wireless communication system between a user equipment (UE) and a base station.

**Introduction**

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

TAHA HASAN ET AL: "Secret Key Exchange Using Private Random Precoding in MIMO FDD and TDD Systems", IEEE TRANSACTIONS ON VEHICULAR TECHNOLOGY, IEEE, USA, 1 June 2017, presents a versatile method for establishing the secret key in MIMO FDD and TDD systems based on PRP in a closed-loop decode-and-forward relay mode.

WO 2015/023233 A1 relates to precoding-codebook-based secure uplink transmission in LTE networks.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

### SUMMARY

Aspects of the invention are defined in the claims.

In the following, each of the described methods, apparatuses, examples, and aspects which do not fully correspond to the invention as defined in the claims is thus not according to the invention and is, as well as the whole following description, present for illustration purposes only or to highlight specific aspects or features of the claims.

### BRIEF DESCRIPTION OF THE DRAWINGS

FIG. 1 is a diagram illustrating an example of a wireless communications system and an access network.

FIG. 2A is a diagram illustrating an example of a first frame, in accordance with various aspects of the present disclosure.

FIG. 2B is a diagram illustrating an example of DL channels within a subframe, in accordance with various aspects of the present disclosure.

FIG. 2C is a diagram illustrating an example of a second frame, in accordance with various aspects of the present disclosure.

FIG. 2D is a diagram illustrating an example of UL channels within a subframe, in accordance with various aspects of the present disclosure.

FIG. 3 is a diagram illustrating an example of a base station and user equipment (UE) in an access network.

FIG. 4 illustrates a table depicting various examples of information which the UE may receive or process in various layers depending on a state of the UE.

FIG. 5 illustrates an example of a network including a first UE, a base station, and a second UE.

FIG. 6 is a diagram illustrating an example of a bandwidth part (BWP) including different examples of SRS transmitted

3

within a 5G new radio (NR) frame structure.

FIG. 7 is a diagram illustrating an example of channel state information reference signal (CSI-RS) resources within the 5G NR frame structure.

FIG. 8 illustrates an example of time-domain orthogonal cover codes (TD-OCCs) transmitted over multiple resource elements (REs) in a time period.

FIG. 9 is a call-flow diagram illustrating example communications between a UE and base station.

FIG. 10 is a flowchart of a method of wireless communication by a UE.

FIG. 11 is a flowchart of a method of wireless communication by a base station.

FIG. 12 is a diagram illustrating an example of a hardware implementation for an example apparatus.

FIG. 13 is a diagram illustrating another example of a hardware implementation for another example apparatus.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form to avoid obscuring such concepts.

Security is an important aspect of wireless communications. Since wireless channels are broadcast in nature, any wireless device with radio frequency (RF) capability (e.g., a UE) may potentially eavesdrop or intercept ongoing transmissions or data exchanges. Moreover, in Internet of Things (IoT) device communications, where a myriad of devices may be connected to each other, the risk to security may be even greater due to the relatively high number of potential data leak points. As a result, preventing eavesdropping or information leakage in wireless communications is of primary importance.

Some information may already include pre-configured security mechanisms, such as dedicated control channel (DCCH) information or dedicated traffic channel (DTCH) information. However, most of the control information that is sent over wireless channels is typically unsecured. As a result, if an eavesdropper were to intercept and modify such control information, the eavesdropper could cause an out-of-service event for the UE or degradation of data throughput. Thus, it would be helpful to secure the transmission of such information to at least prevent out-of-service scenarios or throughput degradation.

One technique that a UE or base station may use to secure information in wireless transmissions is to perform an upper layer key extraction and exchange with the other device. In this upper layer security method, the UE and base station may each apply one or more cryptographic functions in an upper layer (e.g., layer 2 or higher) to generate a shared, secret key. The key may be changed periodically to improve security. After generating the key, the UE and base station may each apply that key to secure ongoing transmissions (e.g., by scrambling data with the secret key or encrypting the data in some other manner). However, these techniques may not provide physical (PHY) layer security.

Thus, the UE may also apply physical layer security techniques to generate a secret key. In a first technique, useful for understanding the invention, the UE and base station may extract a key from a channel between the UE and base station based on channel reciprocity and randomness. For example, both the UE and the base station may transmit a reference signal (RS) (e.g., phase tracking reference signal (PTRS), sounding reference signal (SRS), channel state information reference signal (CSI-RS), or any other suitable RS) to the other device over a channel used for communication between the UE and BS. The UE and the base station may then perform channel estimation of the channel to determine a communication metric associated with the channel (e.g., channel power, reference signal received power (RSRP), reference signal received quality (RSRQ), received signal strength indicator (RSSI), signal to interference and noise ratio (SINR), channel phase and/or signal phase, and/or any other suitable communication metrics). Each of the UE and the base station may then quantize (e.g., map) their respective determined communication metrics to a value. In some examples, the quantized value may be a secret key. In other examples, the quantized value may be an input to a secret key derivation function configured to generate the secret key based at least in part on the quantized value. In either case, both the UE and the base station may determine the
secret key, and use the secret key to encrypt uplink and downlink communications over the channel.

In a second technique, the UE may transmit an RS (e.g., SRS) to the base station over a channel used for communication between the UE and BS. In some examples, the UE may transmit the RS using a first antenna port. In response to receiving the RS, the base station may use the RS received from the UE to perform channel estimation. The base station may then determine a secret key and/or a complex-value parameter corresponding to the secret key (e.g., the complex-value parameter may be equal to the secret key, or the complex-value parameter may be mappable to the secret key via pre-configured/configured codebook or index known to both UE and base station). The base station may transmit a signal to the UE over a particular time-domain and frequency-domain resource (e.g., a resource element (RE), resource block (RB), precoding resource block group (PRG), or any other suitable resource), wherein the signal is based on the secret key (e.g., complex-value parameter) and the channel estimation. For instance, the transmitted signal may be configured to indicate the complex-value parameter to the UE via a precoding vector including one or more elements which are selected by the base station such that a product of a channel vector for a resource element carrying the transmitted signal and the precoding vector is equal to the complex-value parameter. In one example, the complex-value parameter may be a modulation point selected by the base station from a set of constellation points, or a value selected by the base station from a set of known values in a preconfigured/configured codebook. In another example, the complex-value parameter may be a value to be quantized by the UE using certain quantization levels, or a value that the UE may include to a secret key derivation function to generate the secret key. Thus, in response to receiving the signal via the particular resource, the UE may extract the secret key.

Thus, the first technique for physical layer security takes advantage of the channel differences between the UE and base station, and between these devices and a potential eavesdropper (e.g., another UE or base station). Whereas the second technique allows the base station to determine the secret key and manipulate signal transmissions over the channel to provide the UE with an indication of the secret key. Using either technique, the secret key can be used by the base station and the UE to secure entire PHY channel transmissions or portions of PHY channel transmissions (e.g., certain fields or information in a transmission).

Thus, a UE or base station may use at least the second technique to extract or generate a shared, secret key based on a physical layer security method to protect unsecured information intended for the other device.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

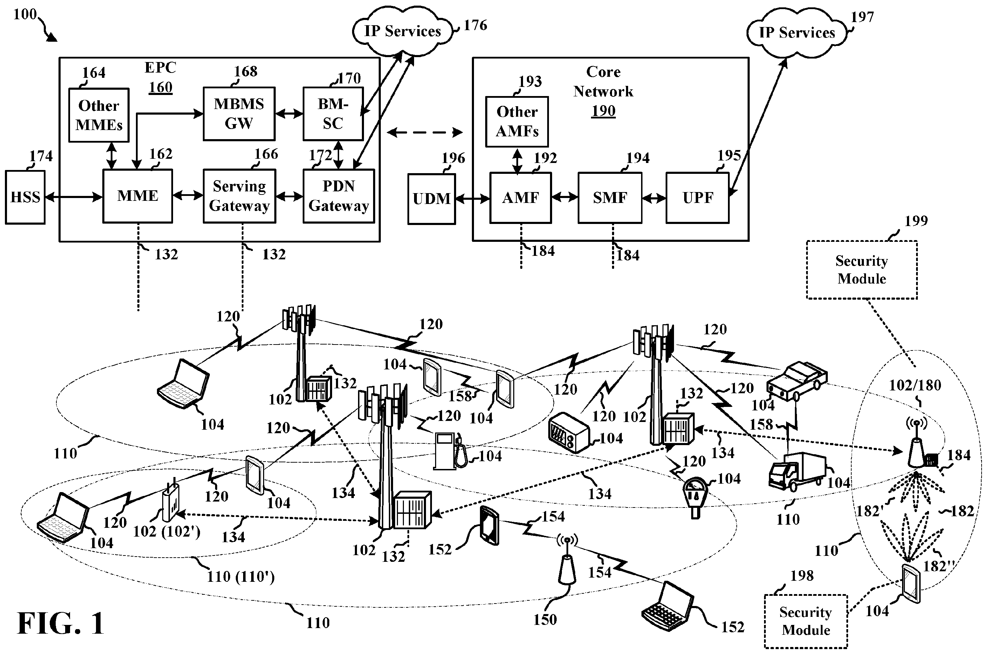

FIG. 1 is a diagram illustrating an example of a wireless communications system and an access network 100. The wireless communications system (also referred to as a wireless wide area network (WWAN)) includes base stations 102, user equipment(s) (UE) 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G Long Term Evolution (LTE) (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G New Radio (NR) (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, Multimedia Broadcast Multicast Service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node B's (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to $Y$ megahertz (MHz) (e.g., 5, 10, 15, 20, 100, 400, etc. MHz) bandwidth per carrier allocated in a carrier aggregation of up to a total of $Yx$ MHz ($x$ component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 gigahertz (GHz) unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, an MBMS Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides Quality of Service (QoS) flow and session management. All user IP packets are transferred through the UPF 195. The UPF 195 provides UE IP address allocation as well as other functions. The UPF 195 is connected to the IP Services 197. The IP Services 197 may include the Internet, an intranet, an IMS, a Packet Switch (PS) Streaming Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the present disclosure may focus on 5G NR, the concepts and various aspects described herein may be applicable to other similar areas, such as LTE, LTE-Advanced (LTE-A), Code Division Multiple Access (CDMA), Global System for Mobile communications (GSM), or other wireless/radio access technologies.

Referring again to FIG. 1, the UE 104 may be configured with a UE security module 198. In certain aspects, the UE security module 198 may be configured to receive, from a base station, a configuration including a key extraction mode. In certain aspects, the UE security module 198 may be configured to transmit a SRS to the base station. In certain aspects, the UE security module 198 may be configured to receive a signal from the base station in response to the SRS, wherein, in response to the key extraction mode, the signal is precoded based on a key. In certain aspects, the UE security module 198 may be configured to extract the key from the signal.

The BS 102 may also be configured with a BS security module 199. In certain aspects, the BS security module 199 may be configured to transmit, to a user equipment (UE), a configuration including a key extraction mode. In certain aspects, the BS security module 199 may be configured to receive a sounding reference signal (SRS) from the UE. In certain aspects, the BS security module 199 may be configured to transmit a signal to the UE in response to the SRS, wherein the signal is precoded based on a key in response to the key extraction mode.

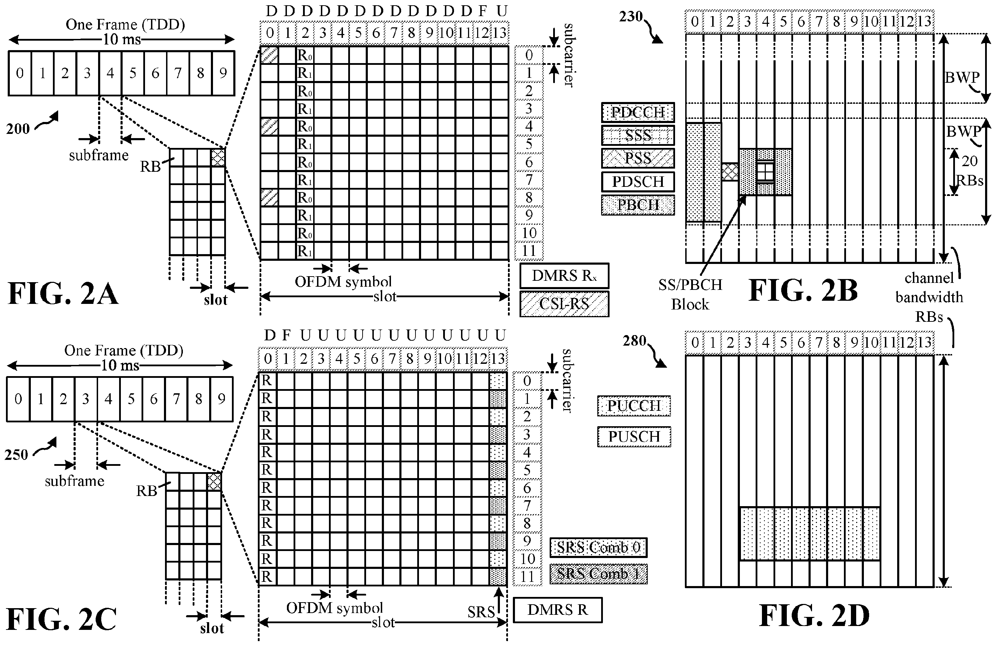

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

Other wireless communication technologies may have a different frame structure and/or different channels. A frame, e.g., of 10 milliseconds (ms), may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) orthogonal frequency-division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies $\mu$ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology $\mu$, there are 14 symbols/slot and $2^\mu$ slots/subframe. The subcarrier spacing and symbol length/duration are a function of the numerology. The subcarrier spacing may be equal to $2^\mu * 15$ kilohertz (kHz), where $\mu$ is the numerology 0 to 4. As such, the numerology $\mu=0$ has a subcarrier spacing of 15 kHz and the numerology $\mu=4$ has a subcarrier spacing of 240 kHz. The symbol length/duration is inversely related to the subcarrier spacing. FIGs. 2A-2D provide an example of slot configuration 0 with 14 symbols per slot and numerology $\mu=2$ with 4 slots per subframe. The slot duration is 0.25 ms, the subcarrier spacing is 60 kHz, and the symbol duration is approximately 16.67 $\mu$s. Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as $R_x$ for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A PDCCH within one BWP may be referred to as a control resource set (CORESET). Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgement (ACK) / non-acknowledgement (NACK) feedback. The PUSCH carries data, and may additionally be used to carry a buffer status report (BSR), a power headroom report (PHR), and/or UCI.

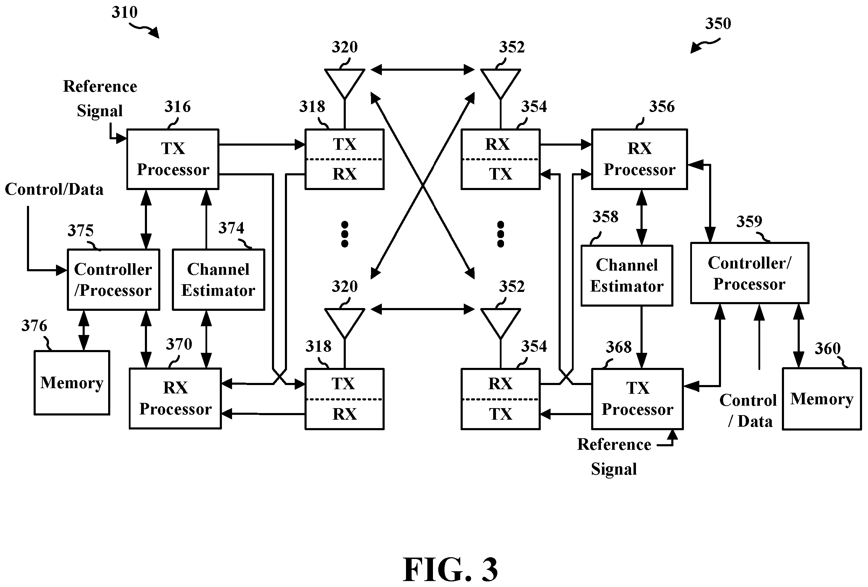

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 of the UE 350 may be configured to perform aspects in connection with the UE security module 198 of FIG. 1. For example, the RX processor 356 and the controller/processor 359 may be configured to receive, from a base station, a configuration including a key extraction mode. In certain aspects, the TX processor 368 and the controller/processor 359 may be configured to transmit a SRS to the base station. In certain aspects, the RX processor 356 and the controller/processor 359 may be configured to receive a signal from the base station in response to the SRS, wherein, in response to the key extraction mode, the signal is precoded based on a key. In certain aspects, the controller/processor 359 may be configured to extract the key from the signal.

At least one of the TX processor 316, the RX processor 370, and the controller/processor 375 of the base station 310 may be configured to perform aspects in connection with the BS security module 199 of FIG. 1. For example, the TX processor 316 and the controller/processor 375 may be configured to transmit, to a UE, a configuration including a key extraction mode. In certain aspects, the RX processor 370 and the controller/processor 375 may be configured to receive a SRS from the UE. In certain aspects, the TX processor 316 and the controller/processor 375 may be configured to transmit a signal to the UE in response to the SRS, wherein the signal is precoded based on a key in response to the key extraction mode.

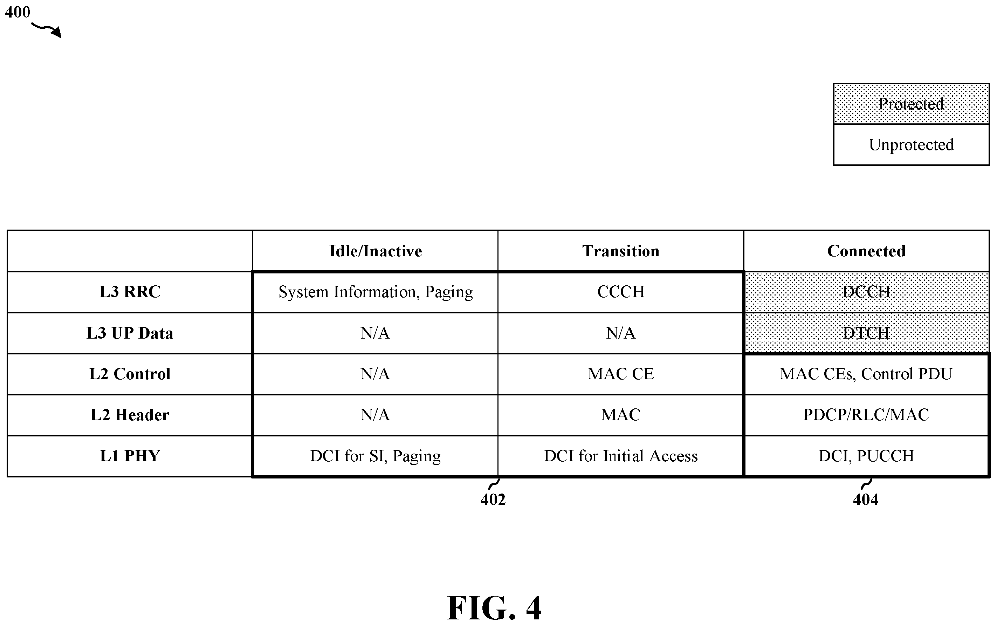

FIG. 4 illustrates a table 400 depicting various examples of information 402, 404 which the UE may receive or process in various layers depending on a state of the UE (idle/inactive, transition, or connected). For example, information 402 may include system information (SI) and paging, common control channel (CCCH) information, MAC-CEs, DCIs for SI, paging, or initial access, or other information in the idle/inactive or transition states, while information 404 may include MAC-CEs and control PDUs, PDCP/RLC/MAC layer information, DCI and UCI (PUCCH) information, or other information in the connected state. Although some of this information may be protected in a particular layer, for instance, DCCH information or DTCH information in the RRC layer (layer 3), most of this information is typically unprotected. In particular, the PHY layer (layer 1) and the control and header layers (layer 2) may be susceptible to eavesdropping or interception. Moreover, malicious interception of and modification of information 402, 404 may result in out-of-service scenarios for the UE or throughput degradation, respectively.

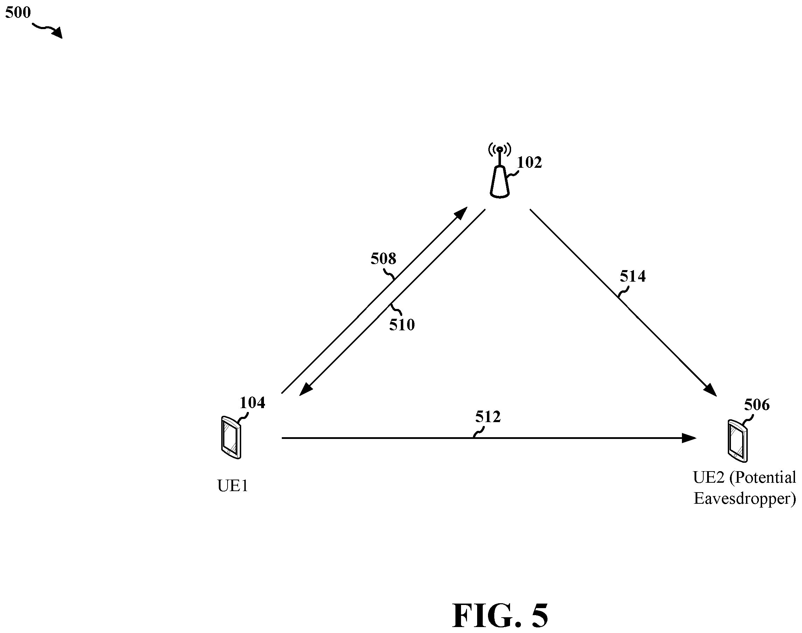

FIG. 5 illustrates an example 500 of a network including a first UE (e.g., UE 104 of FIG. 1), a base station (e.g., base station 102 of FIG. 1), and a second UE 506. The base station 102 serves the first UE 104, but may not serve the second UE 506. However, the second UE 506 may still eavesdrop on communications between the first UE 104 and the base station 102. It should be noted that another base station may replace the second UE 506 as the potential eavesdropper in this example. The first UE 104 may transmit data to the base station 102 in an uplink channel 508, and the base station may transmit data to the first UE in a downlink channel 510. Similarly, the second UE 506 may potentially receive data from the first UE over channel 512, and the second UE 506 may potentially receive data from the base station over channel 514. To secure data communications between the first UE 104 and base station 102 from interception by the second UE 506, the first UE 104 and base station 102 may perform physical layer security techniques, wherein one or more of the first UE 104 and base station 102 may extract a shared secret key.

As discussed, the first UE 104 and base station 102 may use one or more techniques (e.g., the first technique and/or the second technique) to secure physical layer communications between the two devices and prevent the second UE 506 from intercepting information not intended for it.

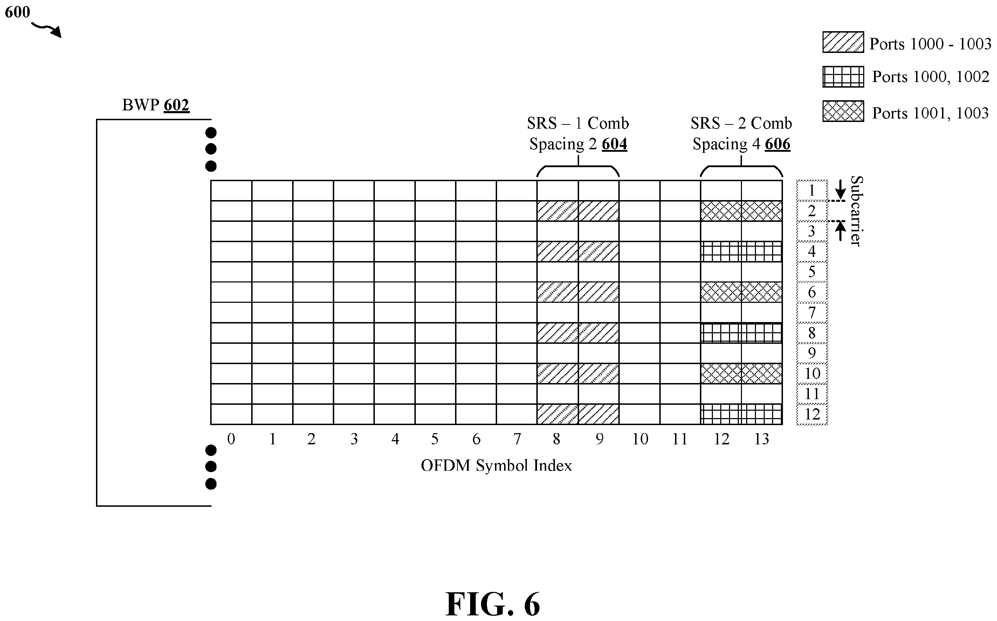

FIG. 6 is a diagram 600 illustrating an example of a bandwidth part (BWP) 602 including various examples of SRS which the UE may transmit within the 5G NR frame structure discussed above in reference to FIGs. 2A-2D. The BWP 602 may include a configured number of RBs, including the RB illustrated in the example of FIG. 6. In one example, some of the symbols may carry a SRS having a single comb (e.g., antenna ports corresponding to antenna port numbers 1000-1003) with a two-subcarrier spacing. In another example, the SRS may have two combs (e.g., a first comb 604 associated with antenna port numbers 1000 and 1002, and a second comb 606 associated with antenna port numbers 1001 and 1003), each comb having a four-subcarrier spacing. In the illustrated example, the SRS is transmitted on symbol indices 8 and 9 in one example, or on symbol indices 12 and 13 in another example, but it should be noted that the SRS may be transmitted on other symbol(s) in other examples.

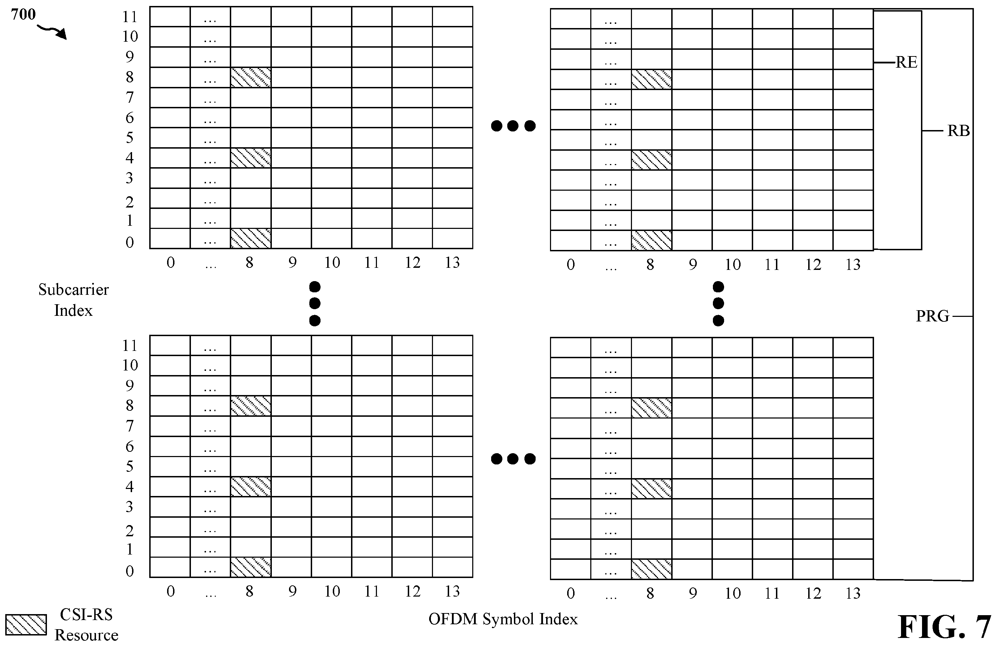

FIG. 7 is a diagram 700 illustrating an example of channel state information reference signal (CSI-RS) resources configured within the 5G NR frame structure discussed above in reference to FIGs. 2A-2D. In this example, the CSI-RS resources may be configured in varying degrees of granularity: for example, an RE, an RB, a PRG, or any other suitable grouping of resources, which may be repeated in the time-domain (in different slots such as illustrated in FIG. 7) and/or the frequency-domain (in different subcarriers such as illustrated in FIG. 7). While the example of FIG. 7 specifically refers to and illustrates CSI-RS resources, it should be noted that the CSI-RS resources may be replaced with resources for a different downlink reference signal (e.g., TRS or other RS).

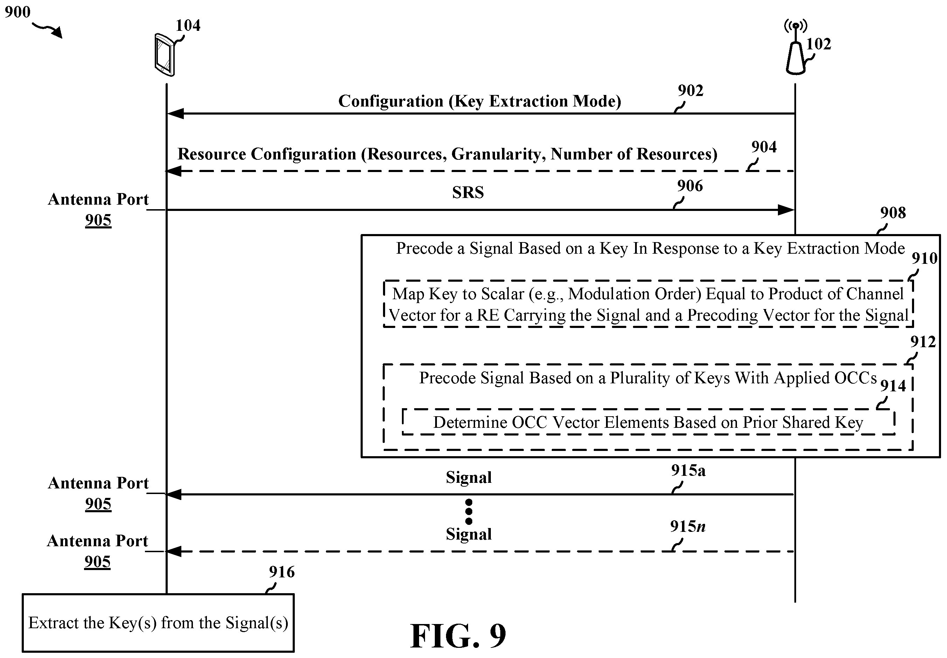

The base station may configure the CSI-RS resources for the UE in REs, RBs, or PRGs indicated in a CSI-RS configuration (or other RS configuration if the CSI-RS is replaced with a different RS). According to the second key extraction technique noted above and further described below with respect to FIG. 9, the base station may select a key and indicate this key (or a complex-value parameter corresponding to the key) in the REs, RBs, or PRGs configured for the CSI-RS or other downlink RS. For instance, the base station may repeat a signal indicating the key in a plurality of the REs, RBs, or PRGs configured for the downlink RS (in the time-domain and/or the frequency-domain). The base station may configure the UE to receive the key in the same antenna port that the UE uses to transmit the SRS in FIG. 6 (e.g., the first comb 604 and/or the second comb 606). Additionally, the base station may configure the UE to receive the key in the same REs that the UE uses to transmit the SRS in FIG. 6. For instance, as illustrated, the CSI-RS resources may be configured in the REs including subcarriers 0, 4, and 8 in symbol index 8, which may be over the same REs used for transmitting the SRS of FIG. 6. Additionally, the BS may transmit the CSI-RS or other RS as well in the resources indicating the key. For example, as discussed in more detail below, a base station may transmit a CSI-RS or other signaling using a same RE that the UE used to transmit the first SRS, and/or the base station may transmit the CSI-RS or other signaling to the same UE antenna port used to transmit the SRS. In some examples, the UE antenna port may be quasi-co-located (QCL'd) with the base station antenna port used to transmit the CSI-RS or other signaling. In some examples, the base station may transmit the CSI-RS or other signaling to the UE using the same BWP that the UE used for transmitting the SRS (e.g., BWP 602 of FIG. 6).

Such channel reciprocity between the UE and the base station may prevent an eavesdropper from properly decoding signaling received by the UE on the same antenna port or on the same RE as the port transmitting the SRS because of the channel differences between the base station and the eavesdropper relative to the base station and the UE.

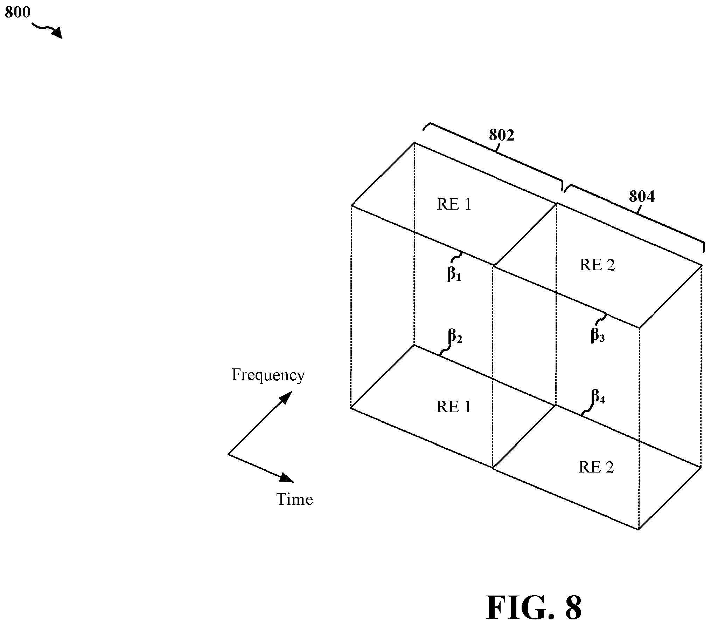

FIG. 8 illustrates an example of time-domain orthogonal cover codes (TD-OCCs) 800 transmitted over multiple REs in a time period (e.g., a slot). While FIG. 8 illustrates a first RE (e.g., RE 1) and a second RE (e.g., RE 2) as being contiguous in time, the first RE and the second RE may alternatively correspond to REs in two different time periods. For example, the first RE may correspond to an RE location in a first slot, and the second RE may correspond to an RE location in a second slot. Moreover, the first and second RE may each correspond to one of the REs illustrated in FIG. 7 as carrying a CSI-RS (or other RS) resource (e.g., in a same subcarrier in different slots). Thus, each of the REs may carry a repetition of the key (or complex-value parameter corresponding to the key) selected by the base station according to the second key extraction mode technique described above and further below with respect to FIG. 9.

Initially, a transmitting device (e.g., the base station 102 of FIG. 1) may first select, from an orthogonal cover code (OCC) matrix, a first column vector for OCC encoding of signaling transmitted using code division multiplexing (CDM) over the first RE. The base station may similarly select a second column vector for OCC encoding of signaling which is CDM'ed over the second RE. As illustrated in this example, a first OCC 802 may be a two-element OCC vector (e.g., OCC vector {β1, β2}, such as {1,1} or some other vector) applied to the signaling transmitted via the first RE, and a second OCC 804 may be another two-element OCC (e.g., OCC vector {β3, β4}, such as {1,-1} or some other vector) applied to the signaling transmitted via the second RE. Alternatively, the first and second OCCs may be OCC vectors with more than two elements (with the number of elements in the OCC vector corresponding to the number of CDM'ed REs). It should be noted that a signal in each of the first RE and the second RE may be orthogonally cover coded with a plurality of OCC vector elements. For example, a signal carried in RE 1 may be OCC'ed with {β1, β2}, and a single carried in RE 2 may be OCC'ed with {β3, β4}.

Each of the OCC vector elements (β1, β2, β3, β4) may be applied for a same or different key selected by the base station according to the second key extraction mode technique. Thus, the base station may repeat multiple copies of the same key or different keys in each of the CDM'ed REs for a same UE or a different UE. For instance, referring to the example of FIG. 8, the base station may apply first OCC 802 to a signal carried in RE 1 such that RE 1 indicates the same key or different keys for the same UE or different UEs (e.g., a first key when β1 is applied to the signal [illustrated in FIG. 8 as the top RE 1] and a second key when β2 is applied to the signal [illustrated in FIG. 8 as the bottom RE 1]). Similarly, the base station may apply second OCC 804 to a signal carried in RE 2 such that RE 2 indicates the same key or different keys for the same UE or different UEs (e.g., a first key when β3 is applied to the signal [illustrated in FIG. 8 as the top RE 2] and a second key when β4 is applied to the signal [illustrated in FIG. 8 as the bottom RE 2]). Additional details may be understood in connection with the defined Equations.

For instance, in some examples, the base station 102 may be configured to transmit, to a UE (e.g., UE 104 of FIG. 1) an indication of the same secret key over multiple REs. As illustrated, the base station 102 may transmit an indication of the same secret key in both the first RE and the second RE. The base station 102 may generate transmission signals comprising an indication of the secret key, and apply the first OCC 802 and the second OCC 804 to the signals according to the following equations:

$$Y_1 = \beta_1\alpha_1 + \beta_2\alpha_2 \qquad\qquad \text{Equation 1}$$

$$Y_2 = \beta_3\alpha_1 + \beta_4\alpha_2 \qquad\qquad \text{Equation 2}$$

Where: $Y_1$ is a first transmission signal received over the first RE, and $Y_2$ is a second transmission signal received over the second RE, where both the first transmission signal and the second transmission signal include an indication of the same secret key;

$\beta_{1\text{-}4}$ are the OCC vector elements; and

$\alpha_1$ is a complex-value parameter corresponding to a first secret key and $\alpha_2$ is a complex-value parameter corresponding to a second (or same) secret key. In one example, if both the first transmission signal and the second transmission signal are transmitted to the same UE, then $\alpha_1 = \alpha_2$. Alternatively, $\alpha_1 \neq \alpha_2$ if the base station is transmitting two separate indications of two different secret keys (either to the same UE or different UEs).

Additionally, although not illustrated expressly in Equations (1) and (2), $\beta_{1\text{-}4}$ may each refer to a product of the following values: (i) an OCC vector element (e.g., $\pm 1$) (e.g., in first OCC 802 and second OCC 804), (ii) a channel vector (e.g., referred to as $h_{BS\text{-}j,k}$ and explained in additional detail below with respect to FIG. 9) determined by the base station 102 based on channel estimation of signaling (e.g., SRS) transmitted by a UE over a first antenna port $j$ and received over resource $k$, and (iii) a precoding vector (e.g., referred to as $P_{j,k}$ and explained in additional detail below with respect to FIG. 9) that the base station 102 may apply to each transmission signal (received as $Y_1$ and $Y_2$). It should be noted that the base station 102 may adjust the $\beta_{1\text{-}4}$ values using, for example, a discrete Fourier transform (DFT) basis or Walsh codes to ensure that the receiving UE 104 is able to decode the secret keys correctly. In some examples, the $\beta_{1\text{-}4}$ values may be based on a previous secret key shared between the UE 104 and the BS (e.g., in an upper layer security method or according to the first key extraction mode technique described above).

Accordingly, the base station 102 may transmit, to the UE 104, a first transmission signal (received as $Y_1$) over the first RE, and transmit the second transmission signal (received as $Y_2$) over the second RE. It should be noted that in some cases, the first transmission signal ($Y_1$) may be transmitted to a first UE, while the second transmission signal ($Y_2$) may be transmitted to a second UE. In such a case, $\alpha_1 \neq \alpha_2$. Alternatively, $\alpha_1 \neq \alpha_2$ even if transmitted to a same UE in some examples. For instance, the UE may extract or derive the secret key selected by the base station in response to applying two different received alpha values ($\alpha$) into a key derivation function.

In some examples, the base station 102 may transmit the first transmission signal using a first port, and transmit the second transmission signal using a second port. In such an example, the two ports may code-division multiplexed (CDM) for each of the first RE and the second RE.

After receiving the transmission signals, the UE may extract the key(s). For instance, upon receiving the first and second transmission signals, the UE 104 may determine one or more of $\alpha_1$ and $\alpha_2$ using the following equations:

$$\alpha_1 = Y_1^*\beta_1^* + Y_2^*\beta_3^* \qquad\qquad \text{Equation 3}$$

$$\alpha_2 = Y_1^*\beta_2^* + Y_2^*\beta_4^* \qquad\qquad \text{Equation 4}$$

Where $Y_{1-2}^*$ and $\beta_{1-4}^*$ are conjugates of their respective values.

Once the UE obtains the alpha value(s), the UE may decode each of the alpha(s) to extract or derive the key(s). For instance, if an alpha is a QAM value in a codebook of QAM values and different QAM values in the codebook correspond to different keys, the UE may determine the key by comparing the mappings accordingly. Alternatively, if different QAM values in the codebook correspond to different key derivation function input values, the UE may input the mapped value into the key derivation function to derive the secret key. In another example, if an alpha is some other value (not a QAM value) which may be quantized, the UE may determine the key by quantizing the alpha value (e.g., determining one key if alpha is within one range, determining another key if alpha is within another range, etc.). Alternatively, the UE may input the quantized value into a key derivation function to derive the secret key. If the UE receives multiple alphas using OCC, the UE may similarly determine the key based on the multiple alpha values. For instance, the UE may compare each alpha to a QAM value codebook or quantization range to determine different or same key values, and then combining (e.g., averaging) the key values to determine the secret key, or alternatively inputting the values (or the combined value) into a key derivation function to determine the secret key.

*Example Techniques for Securing Physical (PHY) Level Communications*

FIG. 9 is a call-flow diagram illustrating example communications 900 between a UE (e.g., UE 104 of FIG. 1) and base station (e.g., base station 102 of FIG. 1).

Initially, the base station 102 may transmit a first communication 902 to the UE 104 for configuring the UE 104 for secure communication using a secret key. In this example, the base station 102 may transmit configuration information for one or more key extraction modes, or "techniques," so that the UE 104 can transmit secured physical layer signaling using a secret key, and properly decoding received transmissions from the base station 102 using the secret key. For example, the first communication 902 may provide information for configuring the UE 104 to use a first technique for deriving a secret key by quantizing a channel estimation value performed by the UE 104, and/or a second technique for receiving a signal that has been precoded based on a secret key determined by the base station 102.

In a second communication 904, the BS 102 may transmit a resource configuration to the UE 104. The resource configuration may include a CSI-RS configuration indicating CSI-RS resources, resource granularity (e.g., RS, RB, PRG), and number of resources (e.g., number of RSs, RBs, and PRGs) which the base station will repeat the signal indicating alpha/key. For example, the CSI-RS resources may be configured in varying degrees of granularity: an RE, an RB, a PRG, or any other suitable grouping of resources, which may be repeated in the time-domain (in different slots such as illustrated in FIG. 7) and/or the frequency-domain (in different subcarriers such as illustrated in FIG. 7).

In certain aspects, the UE 104 and base station 102 may use the first technique to extract a secret key from a channel between the UE 104 and base station 102 based on channel reciprocity and randomness. For example, the UE 104 and base station 102 may rely upon the reciprocity of channels used for communication between the devices to extract a secret key that an eavesdropping device (e.g., another UE or BS) may not be able to extract due to the randomness of signals as they are received by the eavesdropping device.

For example, the UE 104 may transmit an RS (e.g., SRS) to the base station over a first channel, in response to which the base station 102 may estimate the first channel, apply a mapping function (e.g., a communication metric) to the first channel, and quantize the result to identify a secret key associated with the first channel. Similarly, the base station 102 may provide an RS (e.g., CSI-RS) to the UE 104 over a second channel, in response to which the UE 104 may estimate the second channel, apply the mapping function and quantize the result to identify the same secret key. Thus, where channel reciprocity between the base station 102 and UE 104 exists, both devices may be able to extract the same communication metric or secret key from their respective channels.

In contrast, if another UE or base station, being an unintended recipient of communications over the first and second channels, were to perform the same mapping function, the other UE or base station would identify a different stream of bits (e.g., a different secret key) due to the channel differences between the eavesdropping device and one or more of the UE 104 or BS 102. As such, the eavesdropper would not be able to obtain the secret key shared between the UE 104 and the base station 102.

In certain aspects, the base station 102 may use the second technique to determine a secret key and transmit a signal comprising an indication of the secret key to the UE 104, where the transmitted signal is precoded according to the secret key. For example, similar to the first technique, the UE 104 may transmit an RS to the BS 102 from an antenna port 905 so that the BS 102 may perform channel estimation. As illustrated, the RS is an SRS (e.g., SRS) transmitted by the UE 104 in a third communication 906 from antenna port 905. The BS 102 may then determine whether to use the first technique or the second technique. As illustrated, the BS 102 determines to use the second technique, as described in more detail below.

As discussed, the BS 102 may perform channel estimation using the SRS transmitted by the UE 104. That is, the BS 102 may estimate the channel based on the sounded antenna port 905 at the UE-side. In a first process 908, in response to the third communication 906, the BS 102 may determine a secret key and determine a precoding vector for a transmission signal based on the secret key. In other words, the BS 102 may determine the secret key and precode the transmission signal according to the secret key in response to its determination to use the second technique. Thus, the transmission signal may carry an indication of the secret key, wherein the indication is based at least in part on the precoding vector. The base station 102 may execute a key derivation function (KDF) to generate the secret key. It should be noted that the KDF may include any suitable form or algorithm of KDF (e.g., an advanced encryption scheme (AES) function, a block cipher encryption function, etc.). Using the second technique, the UE 104 and the base station 102 may use the same KDF to generate and encrypt/decrypt the same secret key, as discussed in more detail below.

In some examples, the transmission signal may be determined at a first sub-process 910 using the following equation:

$$y_j = h_{BS-j,k}P_{j,k} + n_{j,k} \qquad\qquad \text{Equation 5}$$

Where:

$y_j$ is the precoded reception signal corresponding to the transmission signal generated by the BS 102 in response to the third communication 906 transmitted by the first antenna port $j$ (e.g., antenna port 905) at the UE-side;

$h_{BS-j,k}$ corresponds to a channel vector of the first channel estimated by the base station 102 between the base station and UE antenna port $j$ over resource $k$. It should be noted that resource $k$ may correspond to one or more of a particular RE, RB, PRB, or any other suitable grouping of time-domain and frequency-domain resources over which the transmission signal is received at the UE, such as one of the REs, RBs, or PRBs illustrated in FIG. 7;

$P_{j,k}$ is a precoding vector that the base station 102 may apply to the transmission signal corresponding to the reception signal $y_j$; and

$n_{j,k}$ is a noise signal (e.g., additive white Gaussian noise (AWGN)) measured by the base station 102 at a second antenna port of base station 102 when receiving the SRS. In some examples, the first antenna port (e.g., antenna port 905) of the UE 104 may be QCL'd with the second antenna port of the base station 102. Such a QCL relationship between the ports may provide channel reciprocity between the UE 104 and the base station 102 in that the channel estimation ($h_{BS-j,k}$) remains a static value from the perspective of both the UE 104 and the BS 102.

In some examples, the base station 102 may determine the precoding vector based on the secret key by configuring the precoding vector so that it satisfies the following equation:

$$h_{BS-j,k}P_{j,k} + n_{j,k} = \alpha_k + n_{j,k} \qquad\qquad \text{Equation 6}$$

Where $\alpha_k$ is a complex-value parameter corresponding to the secret key (the alpha value described above). That is, because the channel vector ($h_{BS-j,k}$) may be a static value, the base station 102 may configure the precoding vector ($P_{j,k}$) to an appropriate value such that the complex-value parameter ($\alpha_k$) is equal to the product of the channel vector for resource $k$ (e.g., an RE carrying the SRS of the third communication 906) and the precoding vector. For instance, the precoding vector may be a Gaussian random variable including some randomly generated elements and one or more other configurable (non-random) elements. When precoding the transmission signal based on the key, the base station may adjust the configurable, non-random element(s) of the precoding vector such that the product of the channel vector and the precoding vector result in the alpha value (which is in turn mapped to the selected key).

Accordingly, the base station 102 may indicate the secret key using the precoded reception signal ($y_j$), and because an eavesdropping device will not know the precoding vector used for the signal (since the precoding vector includes random elements), that device will be unable to decode the transmitted signal or determine the secret key. On the other hand, if the intended receiver (e.g., in this case the UE 104) receives the precoded transmission signal ($y_j$) at the same first antenna port $j$ by which it transmitted the SRS (at antenna port 905 in the example of FIG. 9), the UE 104 may decode the key because the product of the channel vector ($h_{BS-j,k}$) between the UE's antenna port j at resource k and the base station and the precoding vector of antenna port j at resource k is designed to result in the alpha value. Thus, the intended receiver may arrive at the correct alpha value (and thus the key) upon decoding the signal, even if the intended receiver also does not know the precoding vector used for the signal.

In some examples, the BS 102 may determine the complex-value parameter based on a set of constellation points (e.g., BPSK, QPSK, or QAM values). For instance, in one example, a set of constellation points {-1, 1} for BPSK may be pre-configured or configured by the base station for complex-value parameter (alpha) selection. In such example, the BS may select either the values -1 or 1 to be alpha depending on the key (e.g., the BS may select alpha to be -1 for one key or alpha to be 1 for another key). Alternatively, the BS 102 may determine the complex-value parameter based on a set of known values in a preconfigured or configured codebook (other than constellation points). In such case, the BS may similarly select a value from the preconfigured or configured codebook to be alpha depending on the key. Accordingly, when the UE 104 receives the transmission signal ($y_j$) from the BS 102, the UE 104 may decode the signal and identify the complex-value parameter depending on the selected modulation point or codebook value. The UE 104 may then directly map the complex-value parameter to the secret key or input the complex-value parameter into a KDF to determine the secret key. Alternatively, the UE may quantize the complex-value parameter and map the quantized complex-value parameter to the secret key or input the quantization into the KDF to determine the secret key. For instance, the UE may determine a quantization of the complex-value parameter based on one or more configured quantization levels (e.g., the UE may quantize alpha to one quantized value if alpha is within one quantization level or range of complex-value parameters, the UE may quantize alpha to a different quantized value if alpha is within another quantization level or a different range of complex-value parameters, etc.) Upon determining the quantization, the UE may derive the key.

Optionally, at a second sub-process 912, the base station 102 may apply an OCC to one or more transmission signals ($y_j$), e.g., as discussed above in reference to FIG. 8. For example, the base station 102 may generate a precoded signal based on a plurality of secret keys, and apply an OCC cover code to the generated signal. It should be noted that the generated signal may be directed to one or more UEs. For example, one of the plurality of secret keys may be directed to a first UE, and another of the plurality of secret keys may be directed to a second UE. In some examples, at a second sub-process 914, the base station may determine one or more vector elements for the OCC based on a previously shared key.

At a fourth communication 915a, the base station may transmit the precoded transmit signal ($y_j$) to the first antenna port of the UE 104. It should be noted that an accuracy for which the UE 104 can determine or estimate the complex-value parameter ($\alpha_k$) associated with the transmit signal may be improved if the base station 102 repeats transmission of the transmit signal across other resources (e.g., all REs in a set of $k$ REs across slots, RBs, PRBs, etc., such as described above with respect to FIG. 7). In such an example, the UE 104 may calculate an average of the complex-value parameters received. Thus, in some examples, the BS 102 may transmit multiple repetitions of the transmit signal to provide the UE 104 with additional opportunities to estimate the complex-value parameter and improve the UE's accuracy.

As noted, the base station 102 may define the resources used for transmission of the transmit signal. For example, the base station 102 may initially determine the granularity of the resources and provide that information to the UE in a configuration message (e.g., in the second communication 904). The base station 102 may communicate the transmit signal using one or more of the CSI-RS resources illustrated in FIG. 7. In some examples, the transmit signal may be modulated with the CSI-RS signal; however, in other examples, the transmit signal may be transmitted over the CSI-RS resources without the CSI-RS signal or any other data. In some examples, the transmit signal is transmitted in the same BWP 602 used by the UE 104 to transmit the SRS illustrated in FIG. 6.

At a second process 916, the UE 104 may extract the secret key from the received transmit signal. For example, the UE 104 may receive the transmit signal via the fourth communication 915a, as well as any repetitions of the transmit signal such as described above with respect to FIG. 7 (e.g., repeated fourth communication 915n), and decode the transmit signal (and repetitions) to identify the complex-value parameter (alpha) since alpha is the product of the channel vector ($h_{BS-j,k}$) and the precoding vector ($P_{j,k}$) of the transmit signal. If the signal includes OCCs applied to multiple alpha values, the UE may decode the transmit signal to identify each alpha value (such as described above with respect to FIG. 8. Once the UE 104 has determined the value of alpha (or value of alphas), the UE 104 can map the value(s) of alpha (e.g., an average value of alpha(s) received over multiple repetitions) to one or more secret keys according to a known configuration of modulation orders or quantization levels for alpha that is configured by the base station (e.g., in the configuration messages of the first communication 902 and/or the second communication 904). The UE may also input the mapped value(s) of alpha to a key derivation function to obtain the secret key.

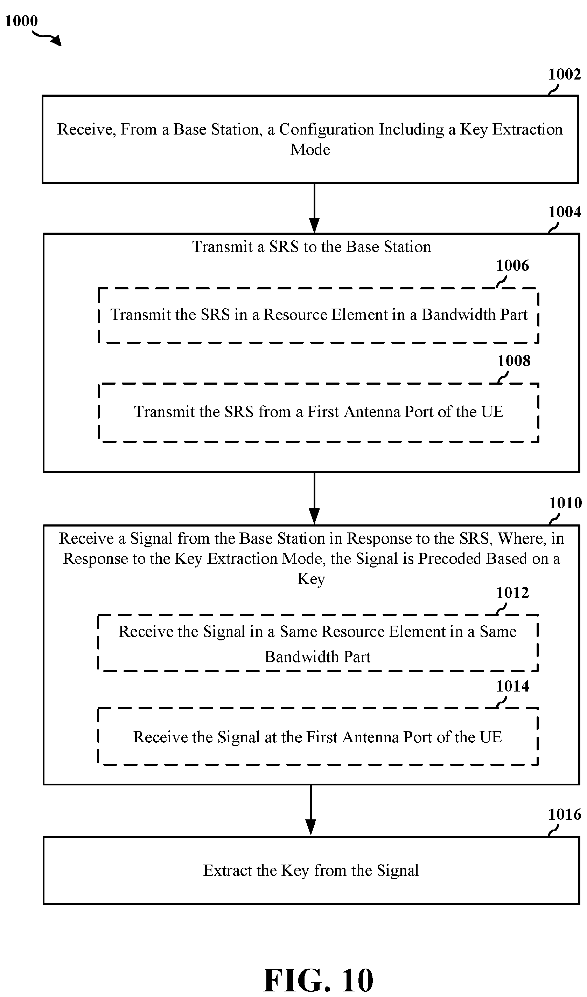

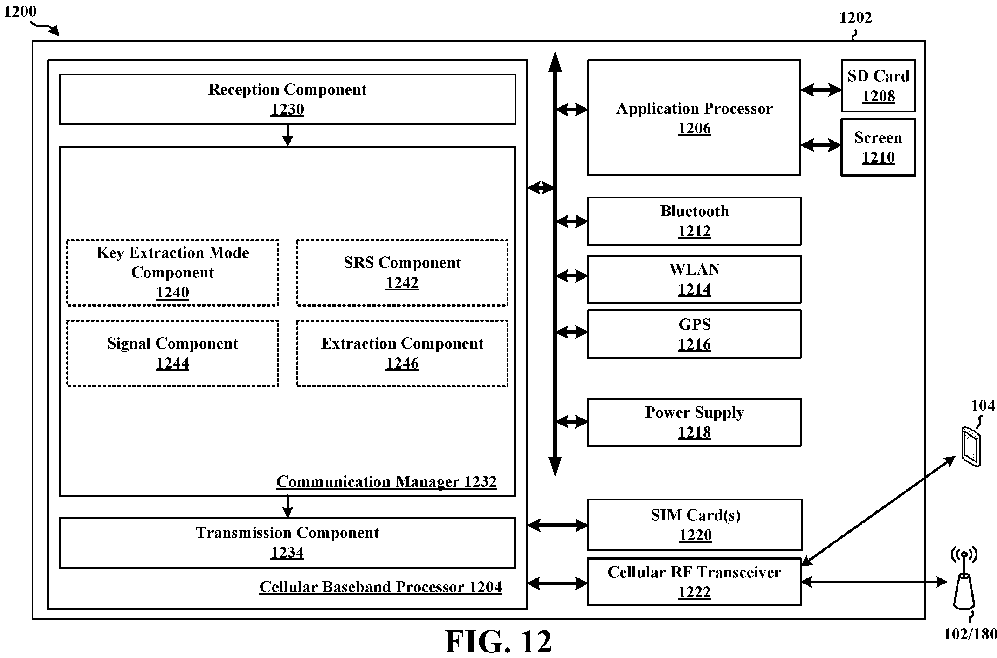

FIG. 10 is a flowchart 1000 of a method of wireless communication. The method may be performed by a UE (e.g., the UE 104, 350 of FIGs. 1 and 3; the apparatus 1202 of FIG. 12). At a first block 1002, the UE may receive, from a base station, a configuration including a key extraction mode. For example, the first block 1002 may be performed by a cellular RF transceiver 1222 and a key extraction mode component 1240 of the cellular baseband processor 1204 of FIG. 12. For instance, as previously described with respect to FIG. 9, the UE 104 may receive from base station 102 the configuration including a key extraction mode in first communication 902. The key extraction mode may be one of the first secret key extraction technique or the second secret key extraction technique which is previously described. For instance, if the base station intends to select a key to indicate to the UE based on precoding (as opposed to determining a key based on channel randomness), the base station may configure the key extraction mode to refer to the second key extraction technique. For example, the key extraction mode may be a bit or flag where one value indicates one technique is active and another value indicates the other technique is active.

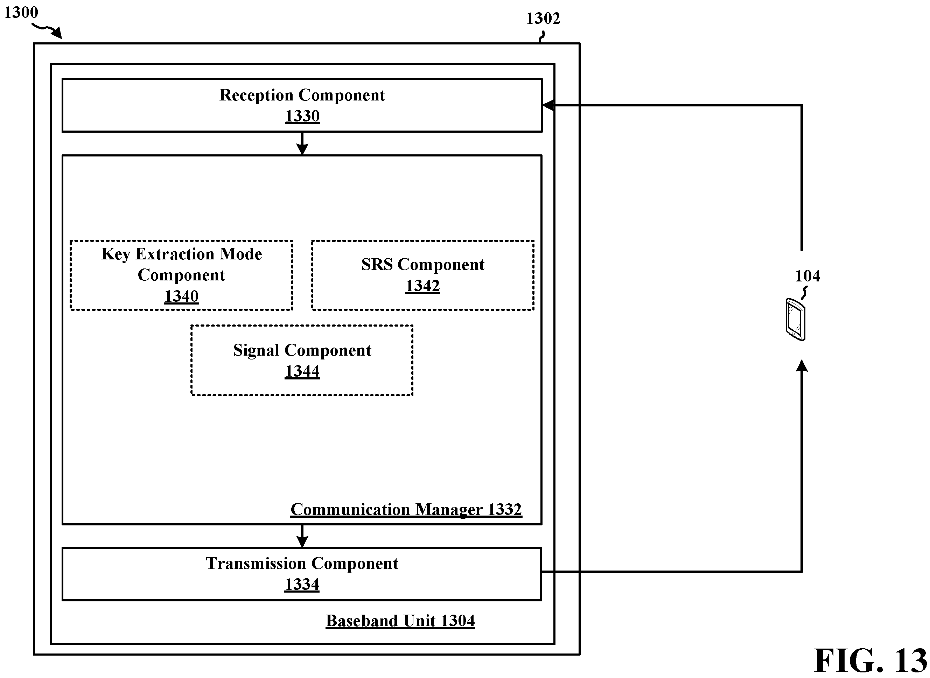

At a second block 1004, the UE may transmit an SRS to the base station (e.g., base station 102 of FIG. 1; apparatus 1302 of FIG. 13). For example, the second block 1004 may be performed by a cellular RF transceiver 1222 and an SRS component 1242 of the cellular baseband processor 1204 of FIG. 12. For instance, as described above with respect to FIG. 9, the UE 104 may transmit third communication 906 including SRS to the base station 102 from antenna port 905 (e.g., antenna port $j$).

In certain aspects, at a first sub-block 1006, the UE may optionally transmit the SRS from a first antenna port of the UE. In some examples, in reference to FIG. 9, the first antenna port (e.g., antenna port 905) of the UE 104 may be QCL'd with the second antenna port of the base station 102. Such a QCL relationship between the ports may provide channel reciprocity between the UE 104 and the base station 102 in that the channel estimation ($h_{BS-j,k}$) remains a static value from the perspective of both the UE 104 and the BS 102.

In certain aspects, at a second sub-block 1008, the UE may optionally receive the signal at the first antenna port of the UE. As discussed above in reference to FIG. 9, if the intended UE receives the precoded transmission signal ($y_j$) at the same first antenna port $j$ by which it transmitted the SRS (at antenna port 905 in the example of FIG. 9), the UE 104 may decode the key because the product of the channel vector ($h_{BS-j,k}$) between the UE's antenna port $j$ at resource k and the base station and the precoding vector of antenna port $j$ at resource k is designed to result in the alpha value.

At a third block 1010, the UE may receive a signal from the base station in response to the SRS, wherein, in response to the key extraction mode, the signal is precoded based on a key. For example, the third block 1010 may be performed by a cellular RF transceiver 1222 and the signal component 1244 of the cellular baseband processor 1204 of FIG. 12. For instance, as described above with respect to FIG. 9, the UE 104 may receive the fourth communication 915a (and repeated fourth communication 915n) in response to the SRS. In response to the key extraction mode indicating the second key extraction mode technique previously described, the signal(s) may be precoded based on a key. For instance, when this mode is active, the base station may select a secret key (corresponding to a complex-value parameter alpha) and precode the signal(s) at the first process 908 such that a product of the channel vector and precoding vector at the UE's antenna port $j$ at resource $k$ is equal to this complex-value parameter alpha.

In certain aspects, at a third sub-block 1012, the UE may optionally transmit the SRS in a resource element in a bandwidth part. For instance, as described above in reference to FIGs. 6 and 7, the base station may transmit the CSI-RS or other signaling to the UE using the same BWP that the UE used for transmitting the SRS (e.g., BWP 602 of FIG. 6).

In certain aspects, at a fourth sub-block 1014, the UE may optionally receive the signal in a same resource element in a same bandwidth part. Similar to the third sub-block 1012 described above, the base station may transmit the CSI-RS or other signaling to the UE using the same BWP that the UE used for transmitting the SRS (e.g., BWP 602 of FIG. 6).

At a fourth block 1016, the UE may extract the key from the signal. For example, the fourth block 1016 may be performed by a cellular RF transceiver 1222 and the key extraction mode component 1240 and the extraction component 1246 of the cellular baseband processor 1204 of FIG. 12. For instance, as described above with respect to FIG. 9, at the second process 916, the UE may extract the key from one or more of the fourth communication 915a and/or the repeated fourth communication 915n. For example, the UE 104 may decode the transmit signal (and repetitions) to identify the complex-value parameter (alpha) since alpha is the product of the channel vector ($h_{BS-j,k}$) and the precoding vector ($P_{j,k}$) of the transmit signal. If the signal includes OCCs applied to multiple alpha values, the UE may decode the transmit signal to identify each alpha value (such as described above with respect to FIG. 8. Once the UE 104 has determined the value of alpha (or value of alphas), the UE 104 can map the value(s) of alpha (e.g., an average value of alpha(s) received over multiple repetitions) to one or more secret keys according to a known configuration of modulation points, codebook values, or quantization levels for alpha that is configured by the base station (e.g., in the configuration messages of the first communication 902 and/or the second communication 904). The UE may also input the mapped value(s) of alpha to a key derivation function to obtain the secret key.

In certain aspects, the key is mapped to a complex-value parameter equal to a product of a channel vector for a resource element carrying the signal and a precoding vector for the signal. For instance, as described above with respect to FIG. 9 and Equation 6, $\alpha_k$ is a complex-value parameter corresponding to the secret key. That is, because the channel vector ($h_{BS-j,k}$) may be a static value, the base station 102 may configure the precoding vector ($P_{j,k}$) to an appropriate value such that the complex-value parameter ($\alpha_k$) is equal to the product of the channel vector for resource $k$ (e.g., an RE carrying the SRS of the third communication 906) and the precoding vector.

In certain aspects, the complex-value parameter is one of a modulation point selected from a set of constellation points, or a selected value from a set of values in a preconfigured codebook or a configured codebook. For instance, as described above with respect to FIG. 9, the BS 102 may determine the complex-value parameter based on a set of constellation points (e.g., BPSK, QPSK, or QAM values). For instance, in one example, a set of constellation points {-1, 1} for BPSK may be pre-configured or configured by the base station for complex-value parameter (alpha) selection. In such example, the BS may select either the values -1 or 1 to be alpha depending on the key (e.g., the BS may select alpha to be -1 for one key or alpha to be 1 for another key). Alternatively, the BS 102 may determine the complex-value parameter based on a set of known values in a preconfigured or configured codebook (other than constellation points). In such case, the BS may similarly select a value from the preconfigured or configured codebook to be alpha depending on the key.

In certain aspects, the signal is repeated in a plurality of reference signal resource elements over time. For example, in reference to FIG. 9, the UE 104 may receive the transmit signal via the fourth communication 915a, as well as any repetitions of the transmit signal such as described above with respect to FIG. 7 (e.g., repeated fourth communication 915n), and decode the transmit signal (and repetitions) to identify the complex-value parameter (alpha) since alpha is the product of the channel vector ($h_{BS-j,k}$) and the precoding vector ($P_{j,k}$) of the transmit signal.

In certain aspects, the SRS is transmitted from an antenna port of the UE, and the signal is received at a same antenna port of the UE. For example, as described above with respect to FIG. 6, the base station may configure the UE to receive the key in the same antenna port that the UE uses to transmit the SRS. See also the first antenna port of FIGs. 8 and 9.

In certain aspects, the signal is repeated in a plurality of resources comprising resource elements, resource blocks, or precoding resource groups. For example, as described above in reference to FIG. 9, the base station 102 may repeat transmission of the transmit signal across other resources (e.g., all REs in a set of $k$ REs across slots, RBs, PRBs, etc., such as described above with respect to FIG. 7). In such an example, the UE 104 may calculate an average of the complex-value parameters received. Thus, in some examples, the BS 102 may transmit multiple repetitions of the transmit signal to provide the UE 104 with additional opportunities to estimate the complex-value parameter and improve the UE's accuracy.

In certain aspects, a granularity of the resources and a number of the resources are indicated in one or more configurations from the base station. For example, as described above in reference to FIG. 9, the resource configuration may include a resource granularity (e.g., RS, RB, PRG), and number of resources (e.g., number of RSs, RBs, and PRGs) which the base station will repeat the signal indicating alpha/key.

In certain aspects, the signal is precoded based on a plurality of keys, the signal is repeated in a plurality of resource elements, and the signal in each of the resource elements is orthogonally cover coded with an orthogonal cover code (OCC) vector including a plurality of OCC vector elements, where a first one of the OCC vector elements of one of the OCC vectors is applied to one of the keys, and a second one of the OCC vector elements of the one of the OCC vectors is applied to a different one of the keys. For instance, as discussed above in reference to FIGs. 6-9, the signal ($Y1$) is precoded based on a plurality of keys (e.g., the base station applies different precoding vectors so that the product of one $P$ vector with channel vector $h$ results in $\alpha_1$ and the product of a different $P$ vector with $h$ results in $\alpha_2$). Moreover, the signal is repeated in a plurality of resource elements (as $Y1$ and $Y2$) (e.g., the fourth communication 915a of FIG. 9 may be in one of the REs, RBs, or PRGs in FIG. 7 and the repeated fourth communication 915n may be in another one of the REs, RBs, or PRGs in FIG. 7)). The signal in each of the REs ($Y1$ and $Y2$) is OCC'ed with an OCC vector including a plurality of OCC vector elements (e.g., $Y_1 = \beta_1 \alpha_1 + \beta_2 \alpha_2$ and $Y_2 = \beta_3 \alpha_1 + \beta_4 \alpha_2$, where the OCC vector applied to $Y1$ includes elements $\{\beta_1, \beta_2\}$ and the OCC vector applied to $Y2$ includes elements $\{\beta_3, \beta_4\}$). Thus, $Y1$ is OCC'ed with vector $\{\beta_1, \beta_2\}$ including multiple OCC elements ($Y1$ includes two betas) and $Y2$ is OCC'ed with vector $\{\beta_3, \beta_4\}$ including multiple OCC elements ($Y2$ includes two betas). Moreover, a first one of the OCC vector elements of one of the OCC vectors (e.g., $\beta_1$ in vector $\{\beta_1, \beta_2\}$) is applied to one of the keys (e.g., $\beta_1$ is applied to $\alpha_1$ in $Y_1$), and a second one of the OCC vector elements of the one of the OCC vectors (e.g., $\beta_2$ in same vector $\{\beta_1, \beta_2\}$) is applied to a different one of the keys (e.g., $\beta_2$ is applied to $\alpha_2$ in $Y_1$). Similarly, for vector $\{\beta_3, \beta_4\}$, $\beta_3$ is applied to $\alpha_1$ in $Y_2$, and $\beta_4$ is applied to $\alpha_2$ in $Y_2$.

In certain aspects, each of the OCC vector elements is based on another key shared between the UE and the base station. For example, as discussed above, the $\beta_{1-4}$ values may be based on a previous secret key shared between the UE 104 and the BS (e.g., in an upper layer security method or according to the first key extraction mode technique described above). In other words, $\beta_{1-4}$ are each based on another key previously shared between the UE and BS (e.g., an upper layer security key or a key used in the first technique).

In certain aspects, the keys are for the UE. For example, as discussed, an indication of one or more keys may be transmitted to a UE 104 to secure communications between the UE 104 and the BS 102. The keys are intended only for the UE 104, and as such, any indication of a key received by an eavesdropping device will result in the wrong key.

In certain aspects, one of the keys is for the UE and another one of the keys is for a different UE. As discussed, the base station may repeat multiple copies of the same key or different keys in each of the CDM'ed REs for a same UE or a different UE.

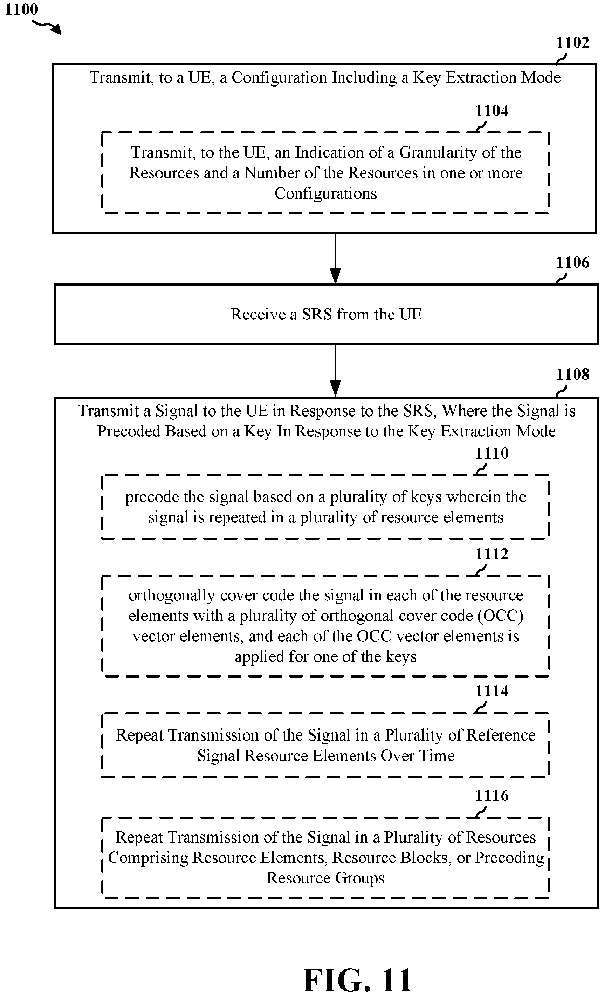

FIG. 11 is a flowchart 1100 of a method of wireless communication. The method may be performed by a BS (e.g., the BS 102 of FIG. 1; the apparatus 1302 of FIG. 13). At a first block 1102, the BS may transmit, to a UE (e.g., the UE 104 of FIG. 1; the apparatus 1202 of FIG. 12), a configuration including a key extraction mode. For example, the first block 1102 may be performed by a transmission component 1334, the key extraction mode component 1340, and the signal component 1344 of the communication manager 1332 of FIG. 13. For instance, as previously described with respect to FIG. 9, the base station 102 may transmit to a UE 104, the configuration including a key extraction mode in first communication 902. The key extraction mode may be one of the first secret key extraction technique or the second secret key extraction technique which is previously described. For instance, if the base station intends to select a key to indicate to the UE based on precoding (as opposed to determining a key based on channel randomness), the base station may configure the key extraction mode to refer to the second key extraction technique. For example, the key extraction mode may be a bit or flag where one value indicates one technique is active and another value indicates the other technique is active.

At a first sub-block 1104, the BS may optionally transmit, to the UE, an indication of a granularity of the resources and a number of the resources in one or more configurations. For example, as described above in reference to FIG. 9, the resource configuration may include a resource granularity (e.g., RS, RB, PRG), and number of resources (e.g., number of RSs, RBs, and PRGs) which the base station will repeat the signal indicating alpha/key.

At a second block 1106, the BS may receive an SRS from the UE. For example, the second block 1106 may be performed by a reception component 1330 and the SRS component 1342 of the communication manager 1332 of FIG. 13. For instance, as described above with respect to FIG. 9, the UE 104 may transmit third communication 906 including SRS to the base station 102 from antenna port 905 (e.g., antenna port $j$).

At a third block 1108, the base station may transmit a signal to the UE in response to the SRS, wherein the signal is precoded based on a key in response to the key extraction mode. For example, the third block 1108 may be performed by the key extraction mode component 1340 of the communication manager 1332, and the transmission component 1334 of FIG. 13. For instance, as described above with respect to FIG. 9, the BS 102 may transmit the fourth communication 915a (and the repeated fourth communication 915n) in response to the SRS. In response to the key extraction mode indicating the second key extraction mode technique previously described, the signal(s) may be precoded based on a key. For instance, when this mode is active, the base station may select a secret key (corresponding to a complex-value parameter alpha) and precode the signal(s) at the first process 908 such that a product of the channel vector and precoding vector at the UE's antenna port $j$ at resource k is equal to this complex-value parameter alpha.

At a second sub-block 1110, the base station may optionally precode the signal based on a plurality of keys wherein the signal is repeated in a plurality of resource elements. For instance, as discussed above in reference to FIG. 9, the signal ($Y1$) is precoded based on a plurality of keys (e.g., the base station applies different precoding vectors so that the product of one $P$ vector with channel vector $h$ results in $\alpha_1$ and the product of a different $P$ vector with $h$ results in $\alpha_2$).

At a third sub-block 1112, the base station may optionally orthogonally cover code the signal in each of the resource elements with an orthogonal cover code vector (OCC) including a plurality of OCC vector elements, where a first one of the OCC vector elements of one of the OCC vectors is applied to one of the keys, and a second one of the OCC vector elements of the one of the OCC vectors is applied to a different one of the key. For instance, the signal in each of the REs ($Y1$ and $Y2$) is OCC'ed with an OCC vector including a plurality of OCC vector elements (e.g., $Y_1 = \beta_1\alpha_1 + \beta_2\alpha_2$ and $Y_2 = \beta_3\alpha_1 + \beta_4\alpha_2$, where the OCC vector applied to $Y1$ includes elements $\{\beta_1, \beta_2\}$ and the OCC vector applied to $Y2$ includes elements $\{\beta_3, \beta_4\}$). Thus, $Y1$ is OCC'ed with vector $\{\beta_1, \beta_2\}$ including multiple OCC elements ($Y1$ includes two betas) and $Y2$ is OCC'ed with vector $\{\beta_3, \beta_4\}$ including multiple OCC elements ($Y2$ includes two betas). Moreover, a first one of the OCC vector elements of one of the OCC vectors (e.g., $\beta_1$ in vector $\{\beta_1, \beta_2\}$) is applied to one of the keys (e.g., $\beta_1$ is applied to $\alpha_1$ in $Y_1$), and a second one of the OCC vector elements of the one of the OCC vectors (e.g., $\beta_2$ in same vector $\{\beta_1, \beta_2\}$) is applied to a different one of the keys (e.g., $\beta_2$ is applied to $\alpha_2$ in $Y_1$). Similarly, for vector $\{\beta_3, \beta_4\}$, $\beta_3$ is applied to $\alpha_1$ in $Y_2$, and $\beta_4$ is applied to $\alpha_2$ in $Y_2$.

At a fourth sub-block 1114, the base station may optionally repeat transmission of the signal in a plurality of reference signal resource elements over time. For example, in reference to FIG. 9, the UE 104 may receive the transmit signal via the fourth communication 915a, as well as any repetitions of the transmit signal such as described above with respect to FIG. 7 (e.g., repeated fourth communication 915n), and decode the transmit signal (and repetitions) to identify the complex-value parameter (alpha) since alpha is the product of the channel vector ($h_{BS-j,k}$) and the precoding vector ($P_{j,k}$) of the transmit signal.

In a fifth sub-block 1116, the base station may optionally repeat transmission of the signal in a plurality of resources comprising resource elements, resource blocks, or precoding resource groups. For example, as described above in reference to FIG. 9, the base station 102 may repeat transmission of the transmit signal across other resources (e.g., all REs in a set of $k$ REs across slots, RBs, PRBs, etc., such as described above with respect to FIG. 7). In such an example, the UE 104 may calculate an average of the complex-value parameters received. Thus, in some examples, the BS 102 may transmit multiple repetitions of the transmit signal to provide the UE 104 with additional opportunities to estimate the complex-value parameter and improve the UE's accuracy.

In certain aspects, the key is mapped to a complex-value parameter equal to a product of a channel vector for a resource element carrying the signal and a precoding vector for the signal. For instance, as described above with respect to FIG. 9 and Equation 6, $\alpha_k$ is a complex-value parameter corresponding to the secret key. That is, because the channel vector ($h_{BS-j,k}$) may be a static value, the base station 102 may configure the precoding vector ($P_{j,k}$) to an appropriate value such that the complex-value parameter ($\alpha_k$) is equal to the product of the channel vector for resource $k$ (e.g., an RE carrying the SRS of the third communication 906) and the precoding vector.

In certain aspects, the complex-value parameter is one of a modulation point selected from a set of constellation points, or a selected value from a set of values in a preconfigured codebook or a configured codebook. For instance, as described above with respect to FIG. 9, the BS 102 may determine the complex-value parameter based on a set of constellation points (e.g., BPSK, QPSK, or QAM values). For instance, in one example, a set of constellation points $\{-1, 1\}$ for BPSK may be pre-configured or configured by the base station for complex-value parameter (alpha) selection. In such example, the BS may select either the values -1 or 1 to be alpha depending on the key (e.g., the BS may select alpha to be -1 for one key or alpha to be 1 for another key). Alternatively, the BS 102 may determine the complex-value parameter based on a set of known values in a preconfigured or configured codebook (other than constellation points). In such case, the BS may similarly select a value from the preconfigured or configured codebook to be alpha depending on the key.

In certain aspects, the signal is repeated in a plurality of reference signal resource elements in different symbols of a slot. For example, in reference to FIG. 9, the UE 104 may receive the transmit signal via the fourth communication 915a, as well as any repetitions of the transmit signal such as described above with respect to FIG. 7 (e.g., repeated fourth communication 915n), and decode the transmit signal (and repetitions) to identify the complex-value parameter (alpha) since alpha is the product of the channel vector ($h_{BS-j,k}$) and the precoding vector ($P_{j,k}$) of the transmit signal.

In certain aspects, the SRS is received from an antenna port of the UE, and the signal is transmitted to a same antenna port of the UE. For example, as described above with respect to FIG. 6, the base station may configure the UE to receive the key in the same antenna port that the UE uses to transmit the SRS. See also the first antenna port of FIGs. 8 and 9.

In certain aspects, the SRS is received in a resource element in a bandwidth part, and the signal is transmitted in a same resource element in a same bandwidth part. For instance, as described above, the base station may transmit the CSI-RS or other signaling to the UE using the same BWP that the UE used for transmitting the SRS (e.g., BWP 602 of FIG. 6).

In certain aspects, each of the OCC vector elements is based on another key shared between the UE and the base station. For example, as discussed above, the $\beta_{1-4}$ values may be based on a previous secret key shared between the UE 104 and the BS (e.g., in an upper layer security method or according to the first key extraction mode technique described above).

In certain aspects, the keys are for the UE. For example, as discussed, an indication of one or more keys may be transmitted to a UE 104 to secure communications between the UE 104 and the BS 102. The keys are intended only for the UE 104, and as such, any indication of a key received by an eavesdropping device will result in the wrong key.

In certain aspects, one of the keys is for the UE and another one of the keys is for a different UE. As discussed, the base station may repeat multiple copies of the same key or different keys in each of the CDM'ed REs for a same UE or a different UE.

FIG. 12 is a diagram 1200 illustrating an example of a hardware implementation for an apparatus 1202. The apparatus 1202 is a UE and includes a cellular baseband processor 1204 (also referred to as a modem) coupled to a cellular RF transceiver 1222 and one or more subscriber identity modules (SIM) cards 1220, an application processor 1206 coupled to a secure digital (SD) card 1208 and a screen 1210, a Bluetooth module 1212, a wireless local area network (WLAN) module 1214, a Global Positioning System (GPS) module 1216, and a power supply 1218. The cellular baseband processor 1204 communicates through the cellular RF transceiver 1222 with the UE 104 and/or base station 102/180. The cellular baseband processor 1204 may include a computer-readable medium / memory. The computer-readable medium / memory may be non-transitory. The cellular baseband processor 1204 is responsible for general processing, including the execution of software stored on the computer-readable medium / memory. The software, when executed by the cellular baseband processor 1204, causes the cellular baseband processor 1204 to perform the various functions described *supra.* The computer-readable medium / memory may also be used for storing data that is manipulated by the cellular baseband processor 1204 when executing software. The cellular baseband processor 1204 further includes a reception component 1230, a communication manager 1232, and a transmission component 1234. The communication manager 1232 includes the one or more illustrated components. The components within the communication manager 1232 may be stored in the computer-readable medium / memory and/or configured as hardware within the cellular baseband processor 1204. The cellular baseband processor 1204 may be a component of the UE 350 and may include the memory 360 and/or at least one of the TX processor 368, the RX processor 356, and the controller/processor 359. In one configuration, the apparatus 1202 may be a modem chip and include just the baseband processor 1204, and in another configuration, the apparatus 1202 may be the entire UE (e.g., see 350 of FIG. 3) and include the aforediscussed additional modules of the apparatus 1202.

The communication manager 1232 includes a key extraction mode component 1240 that is configured to receive, from a base station, a configuration including a key extraction mode, e.g., as described in connection with the first block 1002 of FIG. 10.

The communication manager 1232 further includes an SRS component 1242 that is configured to transmit a sounding reference signal (SRS) to the base station, e.g., as described in connection with the second block 1004 of FIG. 10.

The communication manager 1232 further includes a signal component 1244 configured to receive a signal from the base station in response to the SRS, wherein, in response to the key extraction mode, the signal is precoded based on a key, e.g., as described in connection with the third block 1010 of FIG. 10.

The communication manager 1232 further includes an extraction component 1246 configured to extract the key from the signal, e.g., as described in connection with the fourth block 1016 of FIG. 10.

The apparatus may include additional components that perform each of the blocks of the algorithm in the aforementioned flowchart of FIG. 10. As such, each block in the aforementioned flowchart of FIG. 10 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1202, and in particular the cellular baseband processor 1204, includes means for receiving, from a base station, a configuration including a key extraction mode; means for transmitting a sounding reference signal (SRS) to the base station; means for receiving a signal from the base station in response to the SRS, wherein, in response to the key extraction mode, the signal is precoded based on a key; and means for extracting the key from the signal. The aforementioned means may be one or more of the aforementioned components of the apparatus 1202 configured to perform the functions recited by the aforementioned means. As described *supra*, the apparatus 1202 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

FIG. 13 is a diagram 1300 illustrating an example of a hardware implementation for an apparatus 1302. The apparatus 1302 is a base station and includes a baseband unit 1304. The baseband unit 1304 may communicate through a cellular RF transceiver with the UE 104. The baseband unit 1304 may include a computer-readable medium / memory. The baseband unit 1304 is responsible for general processing, including the execution of software stored on the computer-readable medium / memory. The software, when executed by the baseband unit 1304, causes the baseband unit 1304 to perform the various functions described *supra.* The computer-readable medium / memory may also be used for storing data that is manipulated by the baseband unit 1304 when executing software. The baseband unit 1304 further includes a reception component 1330, a communication manager 1332, and a transmission component 1334. The communication manager 1332 includes the one or more illustrated components. The components within the communication manager 1332 may be stored in the computer-readable medium / memory and/or configured as hardware within the baseband unit 1304. The baseband unit 1304 may be a component of the base station 310 and may include the memory 376 and/or at least one of the TX processor 316, the RX processor 370, and the controller/processor 375.

The communication manager 1332 includes a key extraction mode component 1340 that transmits, to a user equipment (UE), a configuration including a key extraction mode, e.g., as described in connection with the first block 1102 of FIG. 11. The communication manager 1332 further includes an SRS component 1342 that receives a sounding reference signal (SRS) from the UE, e.g., as described in connection with the second block 1106 of FIG. 11. The communication manager 1332 further includes a signal component 1344 that transmits a signal to the UE in response to the SRS, wherein the signal is precoded based on a key in response to the key extraction mode, e.g., as described in connection with a third block 1108 of FIG. 11.

The apparatus may include additional components that perform each of the blocks of the algorithm in the aforementioned flowchart of FIG. 11. As such, each block in the aforementioned flowchart of FIG. 11 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1302, and in particular the baseband unit 1304, includes means for transmitting, to a user equipment (UE), a configuration including a key extraction mode; means for receiving a sounding reference signal (SRS) from the UE; and means for transmitting a signal to the UE in response to the SRS, wherein the signal is precoded based on a key in response to the key extraction mode. The aforementioned means may be one or more of the aforementioned components of the apparatus 1302 configured to perform the functions recited by the aforementioned means. As described supra, the apparatus 1302 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

Examples useful for understanding the invention, but not encompassed by the wording of the claims:

Example 1 is a method of wireless communication at a user equipment (UE), comprising: receiving, from a base station, a configuration including a key extraction mode; transmitting a sounding reference signal (SRS) to the base station; receiving a signal from the base station in response to the SRS, wherein the signal is precoded based on a key in response to the key extraction mode; and extracting the key from the signal.

Example 2 is the method of Example 1, wherein the key is mapped to a complex-value parameter equal to a product of a channel vector for a resource element carrying the signal and a precoding vector for the signal.

Example 3 is the method of Example 2, wherein the complex-value parameter is one of: a modulation point selected from a set of constellation points, or a selected value from a set of values in a preconfigured codebook or a configured codebook.

Example 4 is the method of any of Examples 1 to 3, wherein the signal is repeated in a plurality of reference signal resource elements over time.

Example 5 is the method of any of Examples 1 to 4, wherein the SRS is transmitted from an antenna port of the UE, and the signal is received at a same antenna port of the UE.

Example 6 is the method of any of Examples 1 to 5, wherein the signal is repeated in a plurality of resources comprising resource elements, resource blocks, or precoding resource groups.

Example 7 is the method of Example 6, wherein a granularity of the resources and a number of the resources are indicated in one or more configurations from the base station.

Example 8 is the method of any of Examples 1 to 7, wherein the SRS is transmitted in a resource element in a bandwidth part, and the signal is received in a same resource element in a same bandwidth part.

Example 9 is the method of any of Examples 1 to 8, wherein the signal is precoded based on a plurality of keys, the signal is repeated in a plurality of resource elements, and the signal in each of the resource elements is orthogonally cover coded with an orthogonal cover code (OCC) vector including plurality of OCC vector elements, wherein a first one of the OCC vector elements of one of the OCC vectors is applied to one of the keys, and a second one of the OCC vector elements of the one of the OCC vectors is applied to a different one of the keys.

Example 10 is the method of Example 9, wherein each of the OCC vector elements is based on another key shared between the UE and the base station.

Example 11 is the method of any of Examples 1 to 10, wherein the keys are for the UE.

Example 12 is the method of any of Examples 1 to 10, wherein one of the keys is for the UE and another one of the keys is for a different UE.

Example 13 is a method of wireless communication at a base station, comprising: transmitting, to a user equipment (UE), a configuration including a key extraction mode; receiving a sounding reference signal (SRS) from the UE; and transmitting a signal to the UE in response to the SRS, wherein the signal is precoded based on a key in response to the key extraction mode.

Example 14 is the method of Example 13, wherein the key is mapped to a complex-value parameter equal to a product of a channel vector for a resource element carrying the signal and a precoding vector for the signal.

Example 15 is the method of any of Example 14, wherein the complex-value parameter is one of: a modulation point selected from a set of constellation points, or

a selected value from a set of values in a preconfigured codebook or a configured codebook. Example 16 is the method of any of Examples 13 to 15, wherein the signal is repeated in a plurality of reference signal resource elements in different symbols of a slot.

Example 17 is the method of any of Examples 13 to 16, wherein the SRS is received from an antenna port of the UE, and the signal is transmitted to a same antenna port of the UE.

Example 18 is the method of any of Examples 13 to 17, wherein the signal is repeated in a plurality of resources comprising resource elements, resource blocks, or precoding resource groups.

Example 19 is the method of any of Example 18, wherein a granularity of the resources and a number of the resources are indicated in one or more configurations to the UE.

Example 20 is the method of any of Examples 13 to 19, wherein the SRS is received in a resource element in a bandwidth part, and the signal is transmitted in a same resource element in a same bandwidth part.

Example 21 is the method of any of Examples 13 to 20, wherein the instructions, when executed by the processor, further cause the base station to: precode the signal based on a plurality of keys wherein the signal is repeated in a plurality of resource elements; and orthogonally cover code the signal in each of the resource elements with an orthogonal cover code vector (OCC) including a plurality of OCC vector elements, wherein a first one of the OCC vector elements of one of the OCC vectors is applied to one of the keys, and a second one of the OCC vector elements of the one of the OCC vectors is applied to a different one of the keys.

Example 22 is the method of any of Example 21, wherein each of the OCC vector elements is based on another key shared between the UE and the base station.

Example 23 is the method of any of Examples 13 to 22, wherein the keys are for the UE.

Example 24 is the method of any of Examples 13 to 22, wherein one of the keys is for the UE and another one of the keys is for a different UE.

Example 25 is a user equipment (UE) comprising: a memory; and a processor coupled to the memory, the processor and memory being configured to perform the method of any of claims 1-12.

Example 26 is a base station comprising: a memory; and a processor coupled to the memory, the processor and memory being configured to perform the method of any of claims 13-24.

Example 27 is a user equipment (UE) comprising: one or more means for performing the method of any of claims 1-12.

Example 28 is a base station comprising: one or more means for performing the method of any of claims 13-24.

Example 29 is a non-transitory computer-readable storage medium having instructions stored thereon for performing the method of any of claims 1-12 for wireless communication by a user equipment (UE).

Example 30 is a non-transitory computer-readable storage medium having instructions stored thereon for performing the method of any of claims 13-24 for wireless communication by a user equipment (UE).

**Claims**

1. A user equipment, UE, (1200) configured for wireless communication, the UE (1200) comprising:

   a processor (1206);
   memory (1208) coupled with the (1206) processor; and
   instructions stored in the memory (1208) and operable, when executed by the processor (1206), to cause the UE (1200) to:

   receive, from a base station, a configuration including a key extraction mode;
   transmit a sounding reference signal, SRS, to the base station;
   receive a signal from the base station in response to the SRS, wherein, in response to the key extraction mode, the signal is precoded based on a key; and
   extract the key from the signal wherein the key is derived from a complex-value parameter equal to a product of a channel vector for a resource element carrying the signal and a precoding vector for the signal, wherein the precoding vector is a Gaussian random variable comprising randomly generated elements and one or more configurable elements, the one or more configurable elements having been adjusted such that the product of the channel vector and the precoding vector equals the complex-value parameter.

2. The UE of claim 1, wherein the complex-value parameter is one of:

   a modulation point selected from a set of constellation points, or
   a selected value from a set of values in a preconfigured codebook or a configured codebook.

3. The UE of claim 1, wherein the signal is repeated in a plurality of reference signal resource elements over time.

4. The UE of claim 1, wherein the instructions, when executed by the processor, further cause the UE to transmit the SRS from a first antenna port of the UE, and
   to receive the signal at the first antenna port of the UE.

5. The UE of claim 1, wherein the signal is repeated in a plurality of resources comprising resource elements, resource blocks, or precoding resource groups, wherein a granularity of the resources and a number of the resources are indicated in one or more configurations from the base station.

6. The UE of claim 1, wherein the instructions, when executed by the processor, further cause the UE to:

   transmit the SRS in a resource element in a bandwidth part; and
   receive the signal in a same resource element in a same bandwidth part.

7. The UE of claim 1,

    wherein the signal is precoded based on a plurality of keys, the signal is repeated in a plurality of resource elements, and the signal in each of the resource elements is orthogonally cover coded with an orthogonal cover code, OCC, vector including a plurality of OCC vector elements;
    wherein a first one of the OCC vector elements of one of the OCC vectors is applied to one of the keys, and a second one of the OCC vector elements of the one of the OCC vectors is applied to a different one of the keys.

8. The UE of claim 7, wherein:

    each of the OCC vector elements is based on another key shared between the UE and the base station; or
    the keys are for the UE; or
    one of the keys is for the UE and another one of the keys is for a different UE.

9. A base station (1300) configured for wireless communication, the base station (1300) comprising:

    a processor;
    memory coupled with the processor; and
    instructions stored in the memory and operable, when executed by the processor, to cause the base station to:

    transmit, to a user equipment, UE, a configuration including a key extraction mode;
    receive a sounding reference signal, SRS, from the UE; and
    transmit a signal to the UE in response to the SRS, wherein the signal is precoded based on a key in response to the key extraction mode, wherein the key is derivable from a complex-value parameter equal to a product of a channel vector for a resource element carrying the signal and a precoding vector for the signal, wherein the precoding vector is a Gaussian random variable comprising randomly generated elements and one or more configurable elements, the one or more configurable elements being adjusted by the base station such that the product of the channel vector and the precoding vector equals the complex-value parameter.

10. The base station of claim 9, wherein the complex-value parameter is one of:

    a modulation point selected from a set of constellation points, or
    a selected value from a set of values in a preconfigured codebook or a configured codebook.

11. The base station of claim 9, wherein:

    the instructions, when executed by the processor, further cause the base station to repeat transmission of the signal in a plurality of reference signal resource elements over time; or
    the SRS is received from an antenna port of the UE, and the signal is transmitted to a same antenna port of the UE; or
    the instructions, when executed by the processor, further cause the base station to repeat transmission of the signal in a plurality of resources comprising resource elements, resource blocks, or precoding resource groups, wherein the instructions, when executed by the processor, further cause the base station to transmit, to the UE, an indication of a granularity of the resources and a number of the resources in one or more configurations.

12. The base station of claim 9, wherein the SRS is received in a resource element in a bandwidth part, and the signal is transmitted in a same resource element in a same bandwidth part.

13. The base station of claim 9, wherein the instructions, when executed by the processor, further cause the base station to:

    precode the signal based on a plurality of keys wherein the signal is repeated in a plurality of resource elements; and
    orthogonally cover code the signal in each of the resource elements with an orthogonal cover code vector, OCC, including a plurality of OCC vector elements,
    wherein a first one of the OCC vector elements of one of the OCC vectors is applied to one of the keys, and a second one of the OCC vector elements of the one of the OCC vectors is applied to a different one of the keys.

14. A method (1000) of wireless communication at a user equipment, UE, the method (1000) comprising:

receiving (1002), from a base station, a configuration including a key extraction mode;

transmitting (1004) a sounding reference signal, SRS, to the base station;

receiving a signal from the base station in response to the SRS, wherein, in response to the key extraction mode, the signal is precoded based on a key; and

extracting (1016) the key from the signal, wherein the key is derived from a complex-value parameter equal to a product of a channel vector for a resource element carrying the signal and a precoding vector for the signal, wherein the precoding vector is a Gaussian random variable comprising randomly generated elements and one or more configurable elements, the one or more configurable elements having been adjusted such that the product of the channel vector and the precoding vector equals the complex-value parameter.

15. A method (1100) of wireless communication at a base station, the method (1100) comprising:

transmitting (1102), to a user equipment, UE, a configuration including a key extraction mode;

receiving (1106) a sounding reference signal, SRS, from the UE; and

transmitting (1108) a signal to the UE in response to the SRS, wherein the signal is precoded based on a key in response to the key extraction mode, wherein the key is derivable from a complex-value parameter equal to a product of a channel vector for a resource element carrying the signal and a precoding vector for the signal, wherein the precoding vector is a Gaussian random variable comprising randomly generated elements and one or more configurable elements, the one or more configurable elements being adjusted by the base station such that the product of the channel vector and the precoding vector equals the complex-value parameter.

**Patentansprüche**

1. Eine Benutzereinrichtung bzw. UE (user equipment) (1200), die konfiguriert ist zur drahtlosen Kommunikation, wobei die UE (1200) Folgendes aufweist:

einen Prozessor (1206);

einen Speicher (1208), der mit dem Prozessor (1206) gekoppelt ist; und

Anweisungen, die in dem Speicher (1208) gespeichert sind und bei Ausführung durch den Prozessor (1206) betriebsfähig sind, um die UE (1200) zu veranlassen zum:

Empfangen, von einer Basisstation, einer Konfiguration mit einem Schlüsselextraktionsmodus;

Senden eines Sounding- bzw. Sondierungsreferenzsignals bzw. SRS (sounding reference signal) an die Basisstation;

Empfangen eines Signals von der Basisstation in Reaktion auf das SRS, wobei das Signal basierend auf einem Schlüssel in Reaktion auf den Schlüsselextraktionsmodus vorcodiert wird; und

Extrahieren des Schlüssels aus dem Signal, wobei der Schlüssel abgeleitet wird aus einem komplexwertigen Parameter, der gleich einem Produkt eines Kanalvektors für ein das Signal übertragende Ressourcenelement und eines Vorcodierungsvektors für das Signal ist, wobei der Vorcodierungsvektor eine Gaußsche Zufallsvariable ist, die zufällig erzeugte Elemente und ein oder mehrere konfigurierbare Elemente aufweist, wobei das eine oder die mehreren konfigurierbaren Elemente so angepasst wurden, dass das Produkt aus Kanalvektor und Vorcodierungsvektor dem komplexwertigen Parameter entspricht.

2. Die UE gemäß Anspruch 1, wobei der komplexwertige Parameter einer ist aus:

ein Modulationspunkt, der aus einem Satz von Konstellationspunkten ausgewählt ist, oder

ein ausgewählter Wert aus einem Satz von Werten in einem vorkonfigurierten Codebuch oder einem konfigurierten Codebuch.

3. Die UE gemäß Anspruch 1, wobei das Signal in einer Vielzahl von Referenzsignal-Ressourcenelementen über die Zeit wiederholt wird.

4. Die UE gemäß Anspruch 1, wobei die Anweisungen bei Ausführung durch den Prozessor die UE weiter veranlassen, das SRS von einem ersten Antennenanschluss der UE zu senden, und das Signal an dem ersten Antennenanschluss der UE zu empfangen.

5. Die UE gemäß Anspruch 1, wobei das Signal in einer Vielzahl von Ressourcen wiederholt wird, die Ressourcenelemente, Ressourcenblöcke oder Vorcodierungsressourcengruppen aufweisen, wobei eine Granularität der Ressourcen und eine Anzahl der Ressourcen in einer oder mehreren Konfigurationen von der Basisstation angegeben werden.

6. Die UE gemäß Anspruch 1, wobei die Anweisungen bei Ausführung durch den Prozessor die UE weiter veranlassen zum:

   Senden des SRS in einem Ressourcenelement in einem Bandbreitenteil; und
   Empfangen des Signals in einem gleichen Ressourcenelement in einem gleichen Bandbreitenteil.

7. Die UE gemäß Anspruch 1,

   wobei das Signal basierend auf einer Vielzahl von Schlüsseln vorcodiert ist, das Signal in einer Vielzahl von Ressourcenelementen wiederholt wird, und das Signal in jedem der Ressourcenelemente mit einem orthogonalen Cover-Code bzw. OCC(orthogonal cover code)-Vektor mit einer Vielzahl von OCC-Vektorelemente orthogonal cover-codiert ist;
   wobei ein erstes der OCC-Vektorelemente eines der OCC-Vektoren auf einen der Schlüssel angewendet wird und ein zweites der OCC-Vektorelemente des einen der OCC-Vektoren auf einen anderen der Schlüssel angewendet wird.

8. Die UE gemäß Anspruch 7, wobei:

   jedes der OCC-Vektorelemente auf einem anderen Schlüssel basiert, der zwischen der UE und der Basisstation gemeinsam genutzt wird; oder
   die Schlüssel für die UE bestimmt sind; oder
   einer der Schlüssel für die UE bestimmt ist und ein anderer der Schlüssel für eine andere UE bestimmt ist.

9. Eine Basisstation (1300), die zur drahtlosen Kommunikation konfiguriert ist, wobei die Basisstation (1300) Folgendes aufweist:

   einen Prozessor;
   einen Speicher, der mit dem Prozessor gekoppelt ist; und
   Anweisungen, die in dem Speicher gespeichert sind und bei Ausführung durch den Prozessor betriebsfähig sind, um die Basisstation zu veranlassen zum:

   Senden, an eine Benutzereinrichtung bzw. UE, einer Konfiguration mit einem Schlüsselextraktionsmodus;
   Empfangen eines Sondierungsreferenzsignals bzw. SRS von der UE; und
   Senden eines Signals an die UE in Reaktion auf das SRS, wobei das Signal basierend auf einem Schlüssel in Reaktion auf den Schlüsselextraktionsmodus vorcodiert wird, wobei der Schlüssel abgeleitet werden kann aus einem komplexwertigen Parameter, der gleich einem Produkt eines Kanalvektors für ein das Signal übertragende Ressourcenelement und eines Vorcodierungsvektors für das Signal ist, wobei der Vorcodierungsvektor eine Gaußsche Zufallsvariable ist, die zufällig erzeugte Elemente und ein oder mehrere konfigurierbare Elemente aufweist, wobei das eine oder die mehreren konfigurierbaren Elemente durch die Basisstation so angepasst werden, dass das Produkt aus Kanalvektor und Vorcodierungsvektor dem komplexwertigen Parameter entspricht.

10. Die Basisstation gemäß Anspruch 9, wobei der komplexwertige Parameter einer ist aus:

    ein Modulationspunkt, der aus einem Satz von Konstellationspunkten ausgewählt ist, oder
    ein ausgewählter Wert aus einem Satz von Werten in einem vorkonfigurierten Codebuch oder einem konfigurierten Codebuch.

11. Die Basisstation gemäß Anspruch 9, wobei:

    die Anweisungen bei Ausführung durch den Prozessor die Basisstation weiter veranlassen zum Wiederholen der Übertragung des Signals in einer Vielzahl von Referenzsignal-Ressourcenelementen über die Zeit; oder
    das SRS von einem Antennenanschluss des UE empfangen wird und das Signal an denselben Antennenanschluss der UE gesendet wird; oder
die Anweisungen bei Ausführung durch den Prozessor die Basisstation weiter veranlassen zum Wiederholen der Übertragung des Signals in einer Vielzahl von Ressourcen, die Ressourcenelemente, Ressourcenblöcke oder vorcodierte Ressourcengruppen aufweisen, wobei die Anweisungen bei Ausführung durch den Prozessor die Basisstation weiter veranlassen zum Senden, an die UE, einer Angabe einer Granularität der Ressourcen und einer Anzahl der Ressourcen in einer oder mehreren Konfigurationen.

12. Die Basisstation gemäß Anspruch 9, wobei das SRS in einem Ressourcenelement in einem Bandbreitenteil empfangen wird und das Signal in demselben Ressourcenelement in demselben Bandbreitenteil gesendet wird.

13. Die Basisstation gemäß Anspruch 9, wobei die Anweisungen bei Ausführung durch den Prozessor die Basisstation weiter veranlassen zum:

Vorcodieren des Signals basierend auf einer Vielzahl von Schlüsseln, wobei das Signal in einer Vielzahl von Ressourcenelementen wiederholt wird; und
orthogonalen Cover-Codieren des Signals in jedem der Ressourcenelemente mit einem orthogonaler-Cover-Code- bzw. OCC-Vektor mit einer Vielzahl von OCC-Vektorelementen,
wobei ein erstes der OCC-Vektorelemente eines der OCC-Vektoren auf einen der Schlüssel angewendet wird und ein zweites der OCC-Vektorelemente des einen der OCC-Vektoren auf einen anderen der Schlüssel angewendet wird.

14. Ein Verfahren (1000) zur drahtlosen Kommunikation an einer Benutzereinrichtung bzw. UE, wobei das Verfahren (1000) Folgendes aufweist:

Empfangen (1002), von einer Basisstation, einer Konfiguration mit einem Schlüsselextraktionsmodus;
Senden (1004) eines Sondierungsreferenzsignals bzw. SRS an die Basisstation;
Empfangen eines Signals von der Basisstation in Reaktion auf das SRS, wobei das Signal basierend auf einem Schlüssel in Reaktion auf den Schlüsselextraktionsmodus vorcodiert wird; und
Extrahieren (1016) des Schlüssels aus dem Signal, wobei der Schlüssel abgeleitet wird aus einem komplexwertigen Parameter, der gleich einem Produkt eines Kanalvektors für ein das Signal übertragende Ressourcenelement und eines Vorcodierungsvektors für das Signal ist, wobei der Vorcodierungsvektor eine Gaußsche Zufallsvariable ist, die zufällig erzeugte Elemente und ein oder mehrere konfigurierbare Elemente aufweist, wobei das eine oder die mehreren konfigurierbaren Elemente so angepasst wurden, dass das Produkt aus Kanalvektor und Vorcodierungsvektor dem komplexwertigen Parameter entspricht.

15. Ein Verfahren (1100) zur drahtlosen Kommunikation an einer Basisstation, wobei das Verfahren (1100) Folgendes aufweist:

Senden (1102), an eine Benutzereinrichtung bzw. UE, einer Konfiguration mit einem Schlüsselextraktionsmodus;
Empfangen (1106) eines Sondierungsreferenzsignals bzw. SRS von der UE; und
Senden (1108) eines Signals an die UE in Reaktion auf das SRS, wobei das Signal basierend auf einem Schlüssel in Reaktion auf den Schlüsselextraktionsmodus vorcodiert wird, wobei der Schlüssel abgeleitet werden kann aus einem komplexwertigen Parameter, der gleich einem Produkt eines Kanalvektors für ein das Signal übertragende Ressourcenelement und eines Vorcodierungsvektors für das Signal ist, wobei der Vorcodierungsvektor eine Gaußsche Zufallsvariable ist, die zufällig erzeugte Elemente und ein oder mehrere konfigurierbare Elemente aufweist, wobei das eine oder die mehreren konfigurierbaren Elemente durch die Basisstation so angepasst werden, dass das Produkt aus Kanalvektor und Vorcodierungsvektor dem komplexwertigen Parameter entspricht.

## Revendications

1. Équipement d'utilisateur, UE, (1200) configuré pour une communication sans fil, l'UE (1200) comprenant :

un processeur (1206) ;
une mémoire (1208) couplée au processeur (1206) ; et
des instructions stockées dans la mémoire (1208) et fonctionnelles, lorsqu'elles sont exécutées par le processeur (1206), pour amener l'UE (1200) à :

recevoir, en provenance d'une station de base, une configuration comprenant un mode d'extraction de clé ;
émettre un signal de référence de sondage, SRS, vers la station de base ;
recevoir un signal en provenance de la station de base en réponse au SRS, le signal étant précodé sur la base d'une clé en réponse au mode d'extraction de clé ; et
extraire la clé du signal, la clé étant dérivée d'un paramètre à valeur complexe égal à un produit d'un vecteur de canal pour un élément de ressource transportant le signal et d'un vecteur de précodage pour le signal, le vecteur de précodage étant une variable aléatoire gaussienne comprenant des éléments générés de manière aléatoire et un ou plusieurs éléments configurables, le ou les éléments configurables ayant été réglés de telle sorte que le produit du vecteur de canal et du vecteur de précodage soit égal au paramètre à valeur complexe.

**2.** UE selon la revendication 1, le paramètre à valeur complexe étant l'un des éléments suivants :

un point de modulation sélectionné parmi un ensemble de points de constellation, ou
une valeur sélectionnée parmi un ensemble de valeurs dans un livre de codes préconfiguré ou un livre de codes configuré.

**3.** UE selon la revendication 1, le signal étant répété dans une pluralité d'éléments de ressource de signal de référence dans le temps.

**4.** UE selon la revendication 1, les instructions, lorsqu'elles sont exécutées par le processeur, amenant en outre l'UE à émettre le SRS par un premier port d'antenne de l'UE et à recevoir le signal au niveau du premier port d'antenne de l'UE.

**5.** UE selon la revendication 1, le signal étant répété dans une pluralité de ressources comprenant des éléments de ressources, des blocs de ressources ou des groupes de ressources de précodage, une granularité des ressources et un nombre des ressources étant indiqués dans une ou plusieurs configurations en provenance de la station de base.

**6.** UE selon la revendication 1, les instructions, lorsqu'elles sont exécutées par le processeur, amenant en outre l'UE à :

émettre le SRS dans un élément de ressource dans une partie de bande passante ; et
recevoir le signal dans un même élément de ressource dans une même partie de bande passante.

**7.** UE selon la revendication 1,

le signal étant précodé sur la base d'une pluralité de clés, le signal étant répété dans une pluralité d'éléments de ressources, et le signal dans chacun des éléments de ressources étant codé en couverture orthogonale avec un vecteur de code de couverture orthogonale, OCC, comprenant une pluralité d'éléments de vecteur OCC ;
un premier des éléments de vecteur OCC d'un des vecteurs OCC étant appliqué à une des clés, et un second des éléments de vecteur OCC de l'un des vecteurs OCC étant appliqué à une autre clé différente des clés.

**8.** UE selon la revendication 7,

chacun des éléments de vecteur OCC étant basé sur une autre clé partagée entre l'UE et la station de base ; ou
les clés étant pour l'UE ; ou
une des clés étant pour l'UE et une autre des clés étant pour un UE différent.

**9.** Station de base (1300) configurée pour une communication sans fil, la station de base (1300) comprenant :

un processeur ;
une mémoire couplée au processeur ; et
des instructions stockées dans la mémoire et fonctionnelles, lorsqu'elles sont exécutées par le processeur, pour amener la station de base à :

émettre, vers un équipement d'utilisateur, UE, une configuration comprenant un mode d'extraction de clé ;
recevoir un signal de référence de sondage, SRS, en provenance de l'UE ; et

émettre un signal vers l'UE en réponse au SRS, le signal étant précodé sur la base d'une clé en réponse au mode d'extraction de clé, la clé étant dérivable d'un paramètre à valeur complexe égal à un produit d'un vecteur de canal pour un élément de ressource transportant le signal et d'un vecteur de précodage pour le signal, le vecteur de précodage étant une variable aléatoire gaussienne comprenant des éléments générés de manière aléatoire et un ou plusieurs éléments configurables, le ou les éléments configurables étant réglés par la station de base de telle sorte que le produit du vecteur de canal et du vecteur de précodage soit égal au paramètre à valeur complexe.

10. Station de base selon la revendication 9, le paramètre à valeur complexe étant l'un des éléments suivants :

un point de modulation sélectionné parmi un ensemble de points de constellation, ou
une valeur sélectionnée parmi un ensemble de valeurs dans un livre de codes préconfiguré ou un livre de codes configuré.

11. Station de base selon la revendication 9,

les instructions, lorsqu'elles sont exécutées par le processeur, amenant en outre la station de base à répéter l'émission du signal dans une pluralité d'éléments de ressource de signal de référence dans le temps ; ou
le SRS étant reçu en provenance d'un port d'antenne de l'UE, et le signal étant émis vers un même port d'antenne de l'UE ; ou
les instructions, lorsqu'elles sont exécutées par le processeur, amenant en outre la station de base à répéter l'émission du signal dans une pluralité de ressources comprenant des éléments de ressources, des blocs de ressources ou des groupes de ressources de précodage, les instructions, lorsqu'elles sont exécutées par le processeur, amenant en outre la station de base à émettre, vers l'UE, une indication d'une granularité des ressources et d'un nombre des ressources dans une ou plusieurs configurations.

12. Station de base selon la revendication 9, le SRS étant reçu dans un élément de ressource dans une partie de bande passante, et le signal étant émis dans un même élément de ressource dans une même partie de bande passante.

13. Station de base selon la revendication 9, les instructions, lorsqu'elles sont exécutées par le processeur, amenant en outre la station de base à :

précoder le signal sur la base d'une pluralité de clés, le signal étant répété dans une pluralité d'éléments de ressources ; et
coder en couverture orthogonale le signal dans chacun des éléments de ressources avec un vecteur de code de couverture orthogonale, OCC, comprenant une pluralité d'éléments de vecteur OCC,
un premier des éléments de vecteur OCC d'un des vecteurs OCC étant appliqué à une des clés, et un second des éléments de vecteur OCC de l'un des vecteurs OCC étant appliqué à une autre clé différente des clés.

14. Procédé (1000) de communication sans fil au niveau d'un équipement d'utilisateur, UE, le procédé (1000) comprenant les étapes consistant à :

recevoir (1002), en provenance d'une station de base, une configuration comprenant un mode d'extraction de clé ;
émettre (1004) un signal de référence de sondage, SRS, vers la station de base ;
recevoir un signal en provenance de la station de base en réponse au SRS, le signal étant précodé sur la base d'une clé en réponse au mode d'extraction de clé ; et
extraire (1016) la clé du signal, la clé étant dérivée d'un paramètre à valeur complexe égal à un produit d'un vecteur de canal pour un élément de ressource transportant le signal et d'un vecteur de précodage pour le signal, le vecteur de précodage étant une variable aléatoire gaussienne comprenant des éléments générés de manière aléatoire et un ou plusieurs éléments configurables, le ou les éléments configurables ayant été réglés de telle sorte que le produit du vecteur de canal et du vecteur de précodage soit égal au paramètre à valeur complexe.

15. Procédé (1100) de communication sans fil au niveau d'une station de base, le procédé (1100) comprenant les étapes consistant à :

émettre (1102), vers un équipement d'utilisateur, UE, une configuration comprenant un mode d'extraction de clé ;
recevoir (1106) un signal de référence de sondage, SRS, en provenance de l'UE ; et

émettre (1108) un signal vers l'UE en réponse au SRS, le signal étant précodé sur la base d'une clé en réponse au mode d'extraction de clé, la clé étant dérivable d'un paramètre à valeur complexe égal à un produit d'un vecteur de canal pour un élément de ressource transportant le signal et d'un vecteur de précodage pour le signal, le vecteur de précodage étant une variable aléatoire gaussienne comprenant des éléments générés de manière aléatoire et un ou plusieurs éléments configurables, le ou les éléments configurables étant réglés par la station de base de telle sorte que le produit du vecteur de canal et du vecteur de précodage soit égal au paramètre à valeur complexe.

FIG. 1

**FIG. 2A**

**FIG. 2B**

**FIG. 2C**

**FIG. 2D**

EP 4 441 966 B1

**FIG. 3**

400

| | Protected |
|---|---|
| | Unprotected |

| | Idle/Inactive | Transition | Connected |
|---|---|---|---|
| **L3 RRC** | System Information, Paging | CCCH | DCCH |
| **L3 UP Data** | N/A | N/A | DTCH |
| **L2 Control** | N/A | MAC CE | MAC CEs, Control PDU |
| **L2 Header** | N/A | MAC | PDCP/RLC/MAC |
| **L1 PHY** | DCI for SI, Paging | DCI for Initial Access | DCI, PUCCH |

402                                   404

# FIG. 4

EP 4 441 966 B1

**FIG. 5**

EP 4 441 966 B1

600

BWP **602**

SRS – 1 Comb
Spacing 2 **604**

SRS – 2 Comb
Spacing 4 **606**

Ports 1000 - 1003

Ports 1000, 1002

Ports 1001, 1003

Subcarrier

1
2
3
4
5
6
7
8
9
10
11
12

0    1    2    3    4    5    6    7    8    9    10    11    12    13

OFDM Symbol Index

# FIG. 6

Subcarrier Index

OFDM Symbol Index

CSI-RS Resource

FIG. 7

EP 4 441 966 B1

EP 4 441 966 B1

800

FIG. 8

**900**

**104**

**((•))**
**102**

Configuration (Key Extraction Mode) **902**

Resource Configuration (Resources, Granularity, Number of Resources) **904**

**Antenna Port**
**905**

SRS **906**

**908**

Precode a Signal Based on a Key In Response to a Key Extraction Mode **910**

Map Key to Scalar (e.g., Modulation Order) Equal to Product of Channel Vector for a RE Carrying the Signal and a Precoding Vector for the Signal

**912**

Precode Signal Based on a Plurality of Keys With Applied OCCs **914**

Determine OCC Vector Elements Based on Prior Shared Key

**Antenna Port**
**905**

Signal **915a**

●
●
●

Signal **915n**

**Antenna Port**
**905**

**916**

Extract the Key(s) from the Signal(s)

**FIG. 9**

**1000**

**1002**

Receive, From a Base Station, a Configuration Including a Key Extraction Mode

**1004**

Transmit a SRS to the Base Station

**1006**

Transmit the SRS in a Resource Element in a Bandwidth Part

**1008**

Transmit the SRS from a First Antenna Port of the UE

**1010**

Receive a Signal from the Base Station in Response to the SRS, Where, in Response to the Key Extraction Mode, the Signal is Precoded Based on a Key

**1012**

Receive the Signal in a Same Resource Element in a Same Bandwidth Part

**1014**

Receive the Signal at the First Antenna Port of the UE

**1016**

Extract the Key from the Signal

# FIG. 10

**1100**

**1102**

Transmit, to a UE, a Configuration Including a Key Extraction Mode

**1104**

Transmit, to the UE, an Indication of a Granularity of the Resources and a Number of the Resources in one or more Configurations

**1106**

Receive a SRS from the UE

**1108**

Transmit a Signal to the UE in Response to the SRS, Where the Signal is Precoded Based on a Key In Response to the Key Extraction Mode

**1110**

precode the signal based on a plurality of keys wherein the signal is repeated in a plurality of resource elements

**1112**

orthogonally cover code the signal in each of the resource elements with a plurality of orthogonal cover code (OCC) vector elements, and each of the OCC vector elements is applied for one of the keys

**1114**

Repeat Transmission of the Signal in a Plurality of Reference Signal Resource Elements Over Time

**1116**

Repeat Transmission of the Signal in a Plurality of Resources Comprising Resource Elements, Resource Blocks, or Precoding Resource Groups

# FIG. 11

**FIG. 12**

1302

**Reception Component**

**1330**

**Key Extraction Mode Component**

**1340**

**SRS Component**

**1342**

**Signal Component**

**1344**

**Communication Manager 1332**

**Transmission Component**

**1334**

**Baseband Unit 1304**

104

EP 4 441 966 B1

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015023233 A1

**Non-patent literature cited in the description**

- Secret Key Exchange Using Private Random Precoding in MIMO FDD and TDD Systems. **TAHA HASAN et al.** IEEE TRANSACTIONS ON VEHICU-LAR TECHNOLOGY. IEEE, 01 June 2017